(19) Europäisches Patentamt / European Patent Office / Office européen des brevets

(11) **EP 3 868 818 B1**

(12) **EUROPÄISCHE PATENTSCHRIFT**

(45) Veröffentlichungstag und Bekanntmachung des Hinweises auf die Patenterteilung:
**19.02.2025 Patentblatt 2025/08**

(21) Anmeldenummer: **21151754.5**

(22) Anmeldetag: **15.01.2021**

(51) Internationale Patentklassifikation (IPC):
***C08K 3/013*** *(2018.01)* ***C08K 3/016*** *(2018.01)*
***C08K 3/22*** *(2006.01)* ***C08K 3/34*** *(2006.01)*
***C08K 5/00*** *(2006.01)* ***C08K 7/20*** *(2006.01)*
***C08K 7/28*** *(2006.01)* ***B23K 26/00*** *(2014.01)*

(52) Gemeinsame Patentklassifikation (CPC):
(C-Sets verfügbar)
**C08K 3/013; C08K 3/016; C08K 3/22; C08K 3/34; C08K 5/005; C08K 5/0066; C08K 7/20; C08K 7/28;**
C08K 2003/2241; C08K 2003/2296 (Forts.)

(54) **HOCHVOLTKOMPONENTEN**

HIGH VOLUME COMPONENTS

COMPOSANTS À HAUT VOLTAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.02.2020 EP 20158220**

(43) Veröffentlichungstag der Anmeldung:
**25.08.2021 Patentblatt 2021/34**

(73) Patentinhaber: **Envalior Deutschland GmbH**
**40474 Düsseldorf (DE)**

(72) Erfinder:
- **ENDTNER, Jochen**
  **40474 DÜSSELDORF (DE)**
- **SCHMITZ, Dirk**
  **40474 DÜSSELDORF (DE)**
- **BIENMÜLLER, Matthias**
  **40474 DÜSSELDORF (DE)**
- **WAMBACH, Wolfgang**
  **40474 DÜSSELDORF (DE)**

(74) Vertreter: **Envalior Association**
**Urmonderbaan 22**
**6167 RD Geleen (NL)**

(56) Entgegenhaltungen:
**KR-B1- 101 977 321**

- **ANONYMOUS: "A New Class of Weather-Fast Pigments", 1 April 2005 (2005-04-01), XP055713953, Retrieved from the Internet <URL:https://www.pcimag.com/articles/83054-a-new-class-of-weather-fast-pigments> [retrieved on 20200713]**
- **"New Colour Index for BASF orange pigment", ADDITIVES FOR POLYMERS, ELSEVIER ADVANCED TECHNOLOGY, GB, vol. 2009, no. 4, 1 April 2009 (2009-04-01), pages 3 - 4, XP026090398, ISSN: 0306-3747, [retrieved on 20090401], DOI: 10.1016/S0306-3747(09)70024-7**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



**(Forts. nächste Seite)**

(52) Gemeinsame Patentklassifikation (CPC): (Forts.)

C-Sets
**C08K 3/013, C08L 67/02;**
**C08K 3/016, C08L 67/02;**
**C08K 3/22, C08L 67/02;**
**C08K 3/34, C08L 67/02;**
**C08K 5/005, C08L 67/02;**
**C08K 5/0066, C08L 67/02;**
**C08K 7/20, C08L 67/02;**
**C08K 7/28, C08L 67/02**

## Beschreibung

Die vorliegende Erfindung betrifft Hochvoltkomponenten, insbesondere für die Elektromobilität, enthaltend Polymerzusammensetzungen auf Basis wenigstens eines Polyesters und wenigstens eines Pigmentsystems auf Basis von Mischoxiden enthaltend Titandioxid, Zinnoxid und Zinkoxid, sowie deren Verwendung zur Herstellung Polyester basierter Hochvoltkomponenten oder zur Markierung Polyester basierter Erzeugnisse als Hochvoltkomponenten mittels Laser.

## Stand der Technik

Technische Thermoplaste wie Polyester sind aufgrund ihrer guten mechanischen Stabilität, ihrer chemischen Beständigkeit, den sehr guten elektrischen Eigenschaften und der guten Verarbeitbarkeit, gerade auch im Bereich von Bauteilen für Kraftfahrzeuge, ein wichtiger Werkstoff.

Polyester bilden seit vielen Jahren einen wichtigen Bestandteil zur Fertigung anspruchsvoller Kraftfahrzeugkomponenten. Während über viele Jahre der Verbrennungsmotor das dominierende Antriebskonzept darstellte, ergeben sich im Zuge der Suche nach alternativen Antriebskonzepten auch neue Anforderungen hinsichtlich der Materialauswahl. Eine wesentliche Rolle spielt dabei die Elektromobilität, bei welcher der Verbrennungsmotor teilweise (Hybrid-Fahrzeug [HEV, PHEV, BEV Rex]) oder vollständig (Elektromobil [BEV. FCEV]) durch einen oder mehrere Elektromotoren ersetzt wird, die ihre elektrische Energie typischerweise aus Batterien oder Brennstoffzellen beziehen. Während konventionelle Fahrzeuge mit Verbrennungsmotor als alleinigem Antrieb (ICE [Internal Combustion Engine]) typischerweise mit einem Bordspannungsnetz von 12V auskommen, werden in Hybrid- und Elektrofahrzeugen mit Elektromotoren als Antriebseinheit wesentlich höhere Spannungen benötigt. Dies stellt für den direkten Bereich und die unmittelbare Umgebung von derartig hochspannungsführenden Teilen ein ernstzunehmendes zusätzliches Gefahrenpotential dar, was in technischen Spezifikationen oder auch normativ zunehmend eine Rolle spielt. Eine wichtige Rolle spielt dabei die eindeutige Kennzeichnung dieser Gefährdungsbereiche, um auf diese Weise einen unbeabsichtigten Kontakt mit einem Menschen (Fahrer, Mechaniker, ...) zu vermeiden, wobei wiederum die eindeutige farbliche Kennzeichnung von derartigen Hochvoltbaugruppen eine besonders wichtige Rolle spielt.

So hat das Advanced Vehicle Team des Idaho National Laboratory für HEV (Hybrid Electric Vehical) in **https://avt.inl.gov/sites/default/files/pdf/hev/hevtechspecri.pdf** eine technische Spezifikation veröffentlicht, die für alle Geräte, welche einer Hochspannung größer oder gleich 60V ausgesetzt sind, unter anderem eine klare Kennzeichnung als "HOCHVOLT" empfiehlt und in diesem Zusammenhang auch auf die Farbe Orange als Kennzeichnung hinweist.

Aufgrund der hohen Verarbeitungstemperaturen von teilweise >300°C in der Compoundierung und im Spritzguss ist gerade für technische Thermoplaste wie Polyester die Auswahl an geeigneten Farbmitteln für die Farbe Orange jedoch sehr eingeschränkt.

EP 0 041 274 B1 beschreibt fluoreszierende Zusammensetzungen mit der Fähigkeit die Wellenlängen des Lichtes zu verändern, Formkörper auf Basis solcher Zusammensetzungen als Lichtwellen umwandelnde Elemente und Vorrichtungen zur Umwandlung von optischer Energie in elektrische Energie unter Verwendung eines solchen Elements. In den Beispielen der EP 0 041 274 B1 wird unter anderem 12H-Phthaloperin-12-on in Polyethylenterephthalat (PET) eingesetzt.

12H-Phthaloperin-12-on [CAS Nr. 6925-69-5], bekannt als Solvent Orange 60, ist beispielsweise erhältlich als Macrolex® Orange 3G von der Firma Lanxess Deutschland GmbH, Köln. Nachteilig ist aber, dass Solvent Orange 60 bei Extremanforderungen, insbesondere unter den Anforderungen in der Elektromobilität, zur Migration aus der Kunststoffmatrix neigt, was bei erhöhten Temperaturen zu einem Nachlassen der Farbintensität führt. Das Solvent Orange 60 migriert dabei an die Oberfläche des Kunststoffes (blooming). Von dort kann es abgerieben, abgewaschen oder aufgelöst werden, sich verflüchtigen (fogging) oder in andere Werkstoffe (z.B. benachbarte Kunststoff- oder Kautschukteile) migrieren (Bleeding). Die Konzentration des Solvent Orange 60 im ursprünglichen Kunststoff reduziert sich, was zum Nachlassen der Farbintensität führt. Das migrierte Solvent Orange 60 hat zudem den Nachteil, dass es durch mechanische oder physikalische Prozesse zu benachbarten Bauteilen transportiert werden kann und dort zu negativen Funktionsbeeinträchtigungen führt. Beispielsweise sei hier ein erhöhter elektrischer Widerstand in einem Schalterkontakt genannt, der durch Ablagerung von Solvent Orange 60 auf der Oberfläche von elektrischen Kontakten resultieren kann. Im Umfeld elektrischer Bauteile ist daher die Migration von Inhaltsstoffen aus Kunststoffen heraus generell unerwünscht, da sie die Eigenschaften der Kunststoffe sowie räumlich benachbarter Teile beeinflussen kann, wodurch die Funktion des elektrischen Bauteils ggf. nicht mehr gewährleistet ist. Ausgehend von der Lehre der EP 0 041 274 B1 bestand die Aufgabe der vorliegenden Erfindung deshalb darin, orange Polymerzusammensetzungen auf Basis von Polyester für Hochvoltkomponenten, insbesondere für Hochvoltkomponenten in Elektrofahrzeugen, bereitzustellen, die gegenüber der Lösung in EP 0 041 274 B1 auf Basis von 12H-Phthaloperin-12-on weniger anfällig für Migration, insbesondere Ausbluten (Bleeding) sind.

Wichtig für Hochvoltkomponenten insbesondere in der Elektromobilität ist aber auch die Möglichkeit einer Kennzeichnung um diese mit Zusatzinformationen wie Seriennummern, Herstellermerkmalen, Installationsinformationen oder sicherheitsrelevanten Informationen zu kennzeichnen. Geeignetes Mittel zur Kennzeichnung Kunststoff basierter Bauteile ist die Laserbeschriftung (siehe **https://de.wikipedia.org/wiki/Laserbeschriftung),** wobei bevorzugt Festkörperlaser mit Nd:YAG oder Nd:$YVO_4$ -Kristall und einer Wellenlänge von 1064nm, 532nm oder 355nm eingesetzt werden.

Gemäß dem Stand der Technik, werden bei Beschriftungen mit einem Laser häufig Antimontrioxid-basierte Additive zur Verbesserung des Beschriftungskontrastes eingesetzt (siehe EP 3 281 974 A1**).** Allerdings ist der Einsatz von Antimontrioxid erfindungsgemäß vorzugsweise zu vermeiden, da es aufgrund eines H351 Gefahrenhinweises ("Kann vermutlich Krebs erzeugen") im Markt negativ besetzt ist.

Als Maß für die Qualität der **Laserbeschriftbarkeit** erfindungsgemäßer Hochvoltkomponenten gilt im Rahmen der vorliegenden Erfindung der Kontrast einer mit einem Laserstrahl behandelten Fläche im Vergleich zu einer nicht mit dem Laserstrahl behandelten Fläche, wobei die zu untersuchenden Flächen Platten mit den Maßen 60•40•2 $mm^3$ aus den zu untersuchenden Polymerformmassen sind. Für die Beschriftung wird im Rahmen der vorliegenden Erfindung ein Laser, vorzugsweise ein Festkörperlaser mit Nd:$YVO_4$- oder ND:YAG-Kristall, insbesondere das Laserbeschriftungsgerät DPL-Lexis-Marker(2W)-UV355nm der Firma ACI Laser GmbH, Chemnitz, Deutschland verwendet, ausgestattet mit der Beschriftungssoftware MagicMarkV3. Als Laserquelle fungiert dort ein Nd:$YVO_4$ Laserkristall, der ein Laserlicht der Wellenlänge 355nm liefert. Zum Vergleich des Kontrastes nach Beschriftung wird eine Schreibgeschwindigkeit ("Speed") von 2000mm/s, eine Pulsfrequenz ("Frequency") von 60000Hz und ein Zeilenabstand "(Line spacing)" von 60$\mu$m gewählt, wobei die Laserleistung ("Power") am Gerät 90% beträgt.

Der Kontrast wird im Rahmen der vorliegenden Erfindung unter Anwendung der Graumaßstabsskala gemäß **ISO 105-A03** wie folgt klassifiziert:

- Klassifizierung ( - ): Die laserbestrahlte Fläche unterscheidet sich von der nicht laserbestrahlten Fläche vergleichbar einem Graumaßstab nach **ISO 105-A03** der Klasse 3/4, 4, 4/5 oder 5, womit die laserbestrahlte Fläche nicht oder fast nicht von der nicht laserbestrahlten Fläche zu unterscheiden ist.

- Klassifizierung ( + ): Die laserbestrahlte Fläche unterscheidet sich von der nicht laserbestrahlten Fläche vergleichbar einem Graumaßstab nach **ISO 105-A03** der Klassen 1 bis 3, womit die laserbestrahlte Fläche gut von der nicht laserbestrahlten Fläche zu unterscheiden ist.

Idealerweise sollen erfindungsgemäße orange Polyester basierte Formmassen neben der Laserbeschriftbarkeit gegenüber dem oben zitierten Stand der Technik auch eine verbesserte Lichtechtheit (Lightfastness) und eine verbesserte thermische Stabilität aufweisen, indem die ursprüngliche, unmittelbar nach dem Spritzguss erzielte Farbe unter UV-Licht beziehungsweise unter thermischer Beanspruchung jeweils über einen längeren Zeitraum als im Vergleich zu 12H-Phthaloperin-12-on beibehalten wird. **Ein längerer Zeitraum in Bezug auf die thermische Beanspruchung** bedeutet im Rahmen der vorliegenden Erfindung eine Lagerung im Heißlufttrockenschrank bei 80°C für 12 Stunden. Ein **längerer Zeitraum in Bezug auf die Lichtechtheit** bedeutet im Rahmen der vorliegenden Erfindung eine Bestrahlungszeit mit einer Xenon Lampe, 1500 Watt, 45-130 klx, und Wellenlänge 300 - 800 nm von 96h. Im Rahmen der vorliegenden Erfindung gilt als Maß für die Lichtechtheit (Lightfastness) die Verfärbung der zu untersuchenden Formmassen in Form von 60•40•2$mm^3$-Platten nach UV-Lagerung mit einem UV-Licht Suntest CPS+, 300-800nm, 45-130 klx, mit Window Glass Filter 250-765 $W/m^2$ der Fa. Atlas Material Testing Technology GmbH, Linsengericht, Deutschland, über einen Zeitraum von 96h. Die Bewertung der Verfärbung erfolgt anschließend visuell in Anlehnung an den Blaumaßstab (Blue Wool Scale) gemäß **DIN EN ISO 105-B02,** wobei '8' für eine hervorragende Lichtechtheit (geringe Farbänderung) und '1' für sehr geringe Lichtechtheit (starke Farbänderung) steht.

**Bleeding**

Zur Ermittlung des Bleeding wird im Rahmen der vorliegenden Erfindung wie folgt verfahren:
Zunächst werden Kunststoffplatten aus einer Farbmittel enthaltenden und zu untersuchenden Polyester-Zusammensetzung mit den Maßen 60•40•2 $mm^3$ gefertigt. Für Kunststoffplatten im Sinne der vorliegenden Erfindung wird als Farbmittel wenigstens ein Pigmentsystem auf Basis eines anorganischen Mischoxids enthaltend Titandioxid, Zinnoxid und Zinkoxid eingesetzt. Anschließend wird eine Weich-PVC-Folie mit den Maßen 30•20•2 $mm^3$ zwischen zwei der zunächst gefertigten Kunststoffplatten eingespannt und die Gesamtheit aller Platten in einem Heißlufttrockenschrank bei 80°C für 12 Stunden gelagert. Die anschließende Bewertung des aus den zwei Kunststoffplatten ins Weich-PVC migrierten Farbmittels erfolgt danach visuell nach dem Graumaßstab gemäß **ISO 105-A02,** wobei '5' bedeutet, dass die PVC-Folie keine Farbänderung zeigt (kein visuell erkennbarer Farbmittelübergang von den Polyester-Kunststoffplatten auf die PVC-Folie) und '1' bedeutet, dass das PVC-Folie eine starke Farbveränderung zeigt (starker visuell

erkennbarer Farbmittelübergang von den Polyester-Kunststoffplatten auf die PVC-Folie).

**Lichtechtheit**

Als Maß für die Lichtechtheit (Lightfastness) gilt im Rahmen der vorliegenden Erfindung die Verfärbung nach UV-Lagerung von oben beschriebenen Kunststoffplatten auf Basis der zu untersuchenden und Farbmittel enthaltenden Polyester-Zusammensetzung mit einem UV-Licht vom Typ Suntest CPS+ mit luftgekühlter Atlas Xenon Lampe, 1500 Watt, 45-130 klx, Wellenlänge 300 - 800 nm und Window Glass Filter 250-267 W/$m^2$ des Herstellers Atlas Material Testing Technology GmbH, Linsengericht, Deutschland, und einer Bestrahlungszeit von 96h. Die Bewertung der Verfärbung erfolgt visuell in Anlehnung an den Blaumaßstab (Blue Wool Scale) gemäß DIN EN ISO 105-B02, wobei ‚8' für eine hervorragende Lichtechtheit (geringe Farbänderung) und '1' für sehr geringe Lichtechtheit (starke Farbänderung) steht.

**Hochvolt**

In der Regelung Nr. 100 der Wirtschaftskommission der Vereinten Nationen für Europa (UNECE) - Einheitliche Bedingungen für die Genehmigung von Fahrzeugen hinsichtlich der besonderen Anforderungen an den Elektroantrieb [2015/505] wird im Abschnitt 2.17 der Begriff "Hochspannung" (engl. "High Voltage") als eine Spannung beschrieben, für die ein elektrisches Bauteil oder ein Stromkreis ausgelegt ist, dessen Effektivwert der Betriebsspannung > 60 V und ≤ 1 500 V (Gleichstrom) oder > 30 V und ≤ 1 000 V (Wechselstrom) ist.

Diese Klassifizierung von "Hochspannung" entspricht der Spannungsklasse B der **IS06469-3:2018** ("Electrically propelled road vehicles - Safety specifications - Part 3: Electrical safety"). Dort finden sich in Abschnitt 5.2 auch Kennzeichnungsvorschriften für elektrische Komponenten der Spannungsklasse B durch entsprechende Gefahrensymbole oder die Farbe 'Orange'.

**Orange**

Im Rahmen der vorliegenden Erfindung gilt als Orange eine Farbe, die im RAL Farbsystem nach **https://de.wikipedia.org/wiki/RAL-Farbe#Orange** in der RAL Farbtabelle eine Farbnummer hat, die mit einer "2" beginnt. Im Einzelnen unterscheidet man zum Anmeldetag der vorliegenden Erfindung Orangetöne gemäß **Tab.1:**

**Tab. 1**

| | | L* | a* | b* |
|---|---|---|---|---|
| RAL 2000 | Gelborange | 58,20 | 37,30 | 68,68 |
| RAL 2001 | Rotorange | 49,41 | 39,79 | 35,29 |
| RAL 2002 | Blutorange | 47,74 | 47,87 | 33,73 |
| RAL 2003 | Pastellorange | 66,02 | 41.22 | 52,36 |
| RAL 2004 | Reinorange | 56,89 | 50,34 | 49,81 |
| RAL 2005 | Leuchtorange | 72,27 | 87,78 | 82,31 |
| RAL 2007 | Leuchthellorange | 76,86 | 47,87 | 97,63 |
| RAL 2008 | Hellrotorange | 60,33 | 46,91 | 60,52 |
| RAL 2009 | Verkehrsorange | 55,83 | 47,79 | 48,83 |
| RAL 2010 | Signalorange | 55,39 | 40,10 | 42,42 |
| RAL 2011 | Tieforange | 59,24 | 40,86 | 64,50 |
| RAL 2012 | Lachsorange | 57,75 | 40,28 | 30,66 |
| RAL 2013 | Perlorange | 40,73 | 32,14 | 34,92 |

In **Tab. 1** sind die geräteunabhängigen CIE L*a*b* Farbwerte für den jeweiligen RAL Wert angegeben: L* steht für die Luminanz, a* = D65 und b* = 10°. Das Farbmodell ist in der EN ISO 11664-4 "Colorimetry -- Part 4: CIE 1976 L*a*b* Colour space" genormt. Zu L*a*b*-Farbraum (auch: CIELAB) siehe: **https://de.wikipedia.org/wiki/Lab-Farbraum.**

Jede Farbe im Farbraum ist durch einen Farbort mit den kartesischen Koordinaten L*, a*, b* definiert. Die a*b*-Koordinatenebene wurde in Anwendung der Gegenfarbentheorie konstruiert. Auf der a*-Achse liegen sich Grün und Rot gegenüber, die b*-Achse verläuft zwischen Blau und Gelb. Komplementäre Farbtöne stehen sich jeweils um 180° gegenüber, in ihrer Mitte (dem Koordinatenursprung a*=0, b*=0) ist Grau.

Die L*-Achse beschreibt die Helligkeit (Luminanz) der Farbe mit Werten von 0 bis 100. In der Darstellung steht diese im Nullpunkt senkrecht auf der a*b*-Ebene. Sie kann auch als Neutralgrauachse bezeichnet werden, denn zwischen den Endpunkten Schwarz (L*=0) und Weiß (L*=100) sind alle unbunten Farben (Grautöne) enthalten. Die a*-Achse

beschreibt den Grün- oder Rotanteil einer Farbe, wobei negative Werte für Grün und positive Werte für Rot stehen. Die b*-Achse beschreibt den Blau- oder Gelbanteil einer Farbe, wobei negative Werte für Blau und positive Werte für Gelb stehen.

Die a*-Werte reichen von ca. -170 bis +100, die b*-Werte von -100 bis +150, wobei die Maximalwerte nur bei mittlerer Helligkeit bestimmter Farbtöne erreicht werden. Der CIELAB-Farbkörper hat im mittleren Helligkeitsbereich seine größte Ausdehnung, die aber je nach Farbbereich unterschiedlich in Höhe und Größe ist.

Im Rahmen der vorliegenden Erfindung sind Polymerzusammensetzungen sowie daraus herzustellende Hochvoltkomponenten bevorzugt, deren Farbwert dem RAL 2003, Pastellorange mit L*a*b* 66,02 / 41.22 / 52,36 möglichst nahe kommt, wenn nicht sogar diesem genau entspricht. Der Fachmann wird zu diesem Zweck die Mengen der in den erfindungsgemäßen Polymerzusammensetzungen einzusetzenden Komponenten so wählen, dass als Resultat möglichst RAL 2003 erzielt wird. EP 0 113 229 A1**,** deren Inhalt von der vorliegenden Anmeldung vollumfänglich umfasst wird, zeigt in Fig. 3 ein Dreieckskoordinatendiagramm, das die Zusammensetzung von Pigmentsystemen, die verschiedene Mengen von Zinnoxid, Zinkoxid und Titandioxid enthalten, mit der wahrgenommenen Farbe des Komplexes korreliert. Deutlich zu erkennen ist darin der Bereich, wo die Farbe als Orange / Gelb wahrgenommen wird.

Erfindungsgemäß umfasst sind orange ähnliche Farbtöne die einen Farbabstand ΔE <30 zwischen den L*a*b* Koordinaten der Polymerzusammensetzung und den L*a*b* Koordinaten einer mit "2" beginnenden Farbnummer der RAL-Farbtabelle aufweisen, bevorzugt ein ΔE <20, besonders bevorzugt ein ΔE <12 und ganz besonders bevorzugt ein ΔE <5.

Zur Erläuterung des ΔE siehe beispielsweise:

**https://de.wikipedia.org/wiki/Delta_E.**

Das ΔE ist ein Maß für den empfundenen Farbabstand, das möglichst für alle auftretenden Farben "gleichabständig" ist. In **EN ISO 11664-4** wird der Begriff Farbabstand gegenüber dem Begriff Farbdifferenz bevorzugt. Gegenüber Farbunterschied steht Farbabstand für die quantifizierte Form. Jeder real auftretenden Farbe, auch jeder von einem Gerät abgegebenen oder gemessenen Farbe, lässt sich in einem dreidimensionalen Raum ein Farbort zuordnen. Diese Möglichkeit ist im Graßmannschen Gesetz begründet. Der Wert von ΔE zwischen den Farborten $(L^*,a^*,b^*)_p$ und $(L^*,a^*,b^*)_v$ wird nach **EN ISO 11664-4** als euklidischer Abstand berechnet:

$$\Delta E_{\mathrm{p,v}} = \sqrt{(L_{\mathrm{p}}^* - L_{\mathrm{v}}^*)^2 + (a_{\mathrm{p}}^* - a_{\mathrm{v}}^*)^2 + (b_{\mathrm{p}}^* - b_{\mathrm{v}}^*)^2}$$

Weitere Erläuterungen zu ΔE finden sich in **https://de.wikipedia.org/wiki/Delta_E.**

Zur Klarstellung sei angemerkt, dass vom Rahmen der vorliegenden Erfindung alle aufgeführten allgemeinen oder in Vorzugsbereichen genannten Definitionen und Parameter in beliebigen Kombinationen umfasst sind. Dies betrifft insbesondere auch die einzusetzenden Mengenangaben und Parameter der einzelnen Komponenten in den im Rahmen der vorliegenden Anmeldung beanspruchten Verfahren und Verwendungen. Die im Rahmen dieser Anmeldung genannten Normen beziehen sich auf die jeweils zum Anmeldetag dieser Erfindung geltende Fassung.

Überraschend wurde nun gefunden, dass Hochvoltkomponenten, insbesondere Hochvoltkomponenten für die Elektromobilität, enthaltend thermoplastische Polymerzusammensetzungen auf Basis von Polyestern und wenigstens ein Pigmentsystem auf der Basis anorganischer Mischoxide enthaltend Titandioxid, Zinnoxid und Zinkoxid als oranges Farbmittel sowohl die Anforderungen ans Bleeding, als auch an die Lichtechtheit und an die geforderte Laserbeschriftbarkeit erfüllen.

**Erfindungsgegenstand**

Gegenstand der Erfindung sind Polymerzusammensetzungen, daraus herzustellende Erzeugnisse, vorzugsweise Hochvoltkomponenten, besonders bevorzugt Hochvoltkomponenten für die Elektromobilität, enthaltend

A) 100 Massenanteile Polyester, vorzugsweise eines $C_2$-$C_{10}$-Polyalkylenterephthalats, insbesondere Polybutylenterephthalat, oder Polycarbonat,

B) 0,01 bis 5 Massenanteile, besonders bevorzugt 0,01 bis 3 Massenanteile, wenigstens eines Pigmentsystems auf Basis anorganischer Mischoxide enthaltend Titandioxid, Zinnoxid und Zinkoxid,

mit der Maßgabe eines ΔE <30 zu den L*a*b* Koordinaten einer mit "2" beginnenden Farbnummer der RAL-Farbtabelle.

Gemäß **https://de.wikipedia.org/wiki/Polyester** sind Polyester polymere mit Esterfunktionen -[-CO-O-]- in

ihrer Hauptkette. Zwar kommen auch in der Natur Polyester vor, doch heute versteht man unter Polyester eher eine große Familie synthetischer Polymere (Kunststoffe), zu denen die viel verwendeten **Polycarbonate (PC)** und vor allem das technisch wichtige, thermoplastische Polyethylenterephthalat (PET) gehören. Eine weitere Form sind ungesättigte Polyesterharze (UP-Harze), die durch Härtung zu Duroplasten werden und als preisgünstiges Matrixharz im Bereich Faserverbundkunststoffe verwendet werden. Außerdem lassen sich aromatische Polyester zu flüssigkristallinen Polymerketten anordnen, wodurch sich das Eigenschaftsprofil eines Hochleistungskunststoffes ergibt. Polycarbonat ist deshalb ein Polyester im Sinne der vorliegenden Erfindung.

Die vorliegende Erfindung betrifft aber auch die Verwendung wenigstens eines als Komponente B) einzusetzenden Pigmentsystems auf Basis anorganischer Mischoxide enthaltend Titandioxid, Zinnoxid und Zinkoxid zur Herstellung Polyester basierter Polymerzusammensetzungen, vorzugsweise Polyester basierter Erzeugnisse, besonders bevorzugt Polyester basierter Hochvoltkomponenten, insbesondere Polyester basierter Hochvoltkomponenten für die Elektromobilität, wobei auf 100 Massenanteile wenigstens eines als Komponente A) einzusetzenden Polyesters 0,01 bis 5 Massenanteile, besonders bevorzugt 0,01 bis 3 Massenanteile von Komponente B) eingesetzt werden mit der Maßgabe eines ΔE <30 zu den L*a*b* Koordinaten einer mit "2" beginnenden Farbnummer der RAL-Farbtabelle, wobei Polyester vorzugsweise für ein $C_2$-$C_{10}$-Polyalkylenterephthalat, insbesondere Polybutylenterephthalat, oder Polycarbonat steht,

Die Erfindung betrifft zudem die Verwendung eines Pigmentsystems auf Basis anorganischer Mischoxide enthaltend Titandioxid, Zinnoxid und Zinkoxid als Laserbeschriftungsadditiv Polyester basierter Erzeugnisse mittels Laser, vorzugsweise mittels Festkörperlaser mit Nd:$YVO_4$-Kristall bei einer Wellenlänge von 355nm, wobei auf 100 Massenanteile wenigstens eines Polyesters 0,01 bis 5 Massenanteile, besonders bevorzugt 0,01 bis 3 Massenanteile des Pigmentsystems eingesetzt werden, wobei Polyester vorzugsweise für ein $C_2$-$C_{10}$-Polyalkylenterephthalat, insbesondere Polybutylenterephthalat, oder Polycarbonat steht.

Vorzugsweise betrifft die Erfindung die Verwendung eines Pigmentsystems auf Basis anorganischer Mischoxide enthaltend Titandioxid, Zinnoxid und Zinkoxid als Laserbeschriftungsadditiv Polyester basierter Hochvoltkomponenten, insbesondere Polyester basierter Hochvoltkomponenten für die Elektromobilität, mittels Laser, vorzugsweise mittels Festkörperlaser mit Nd:$YVO_4$-Kristall bei einer Wellenlänge von 355nm, wobei auf 100 Massenanteile wenigstens eines Polyester 0,01 bis 5 Massenanteile, besonders bevorzugt 0,01 bis 3 Massenanteile des Pigmentsystems eingesetzt werden mit der Maßgabe eines ΔE <30 zu den L*a*b* Koordinaten einer mit "2" beginnenden Farbnummer der RAL-Farbtabelle, wobei Polyester vorzugsweise für ein $C_2$-$C_{10}$-Polyalkylenterephthalat, insbesondere Polybutylenterephthalat, oder Polycarbonat steht.

Die vorliegende Erfindung betrifft schließlich ein Verfahren zur Markierung Polyester basierter Erzeugnisse als Hochvoltkomponenten, insbesondere Polyester basierter Hochvoltkomponenten für die Elektromobilität, indem mittels Laser, vorzugsweise mittels Festkörperlaser mit Nd:$YVO_4$-Kristall bei einer Wellenlänge von 355nm, die Erzeugnisse bestrahlt und beschriftet werden, wobei die Erzeugnisse auf Polymerzusammensetzungen basieren, worin 0,01 bis 5 Massenanteile, besonders bevorzugt 0,01 bis 3 Massenanteile wenigstens eines Pigmentsystems auf Basis eines anorganischen Mischoxids enthaltend Titandioxid, Zinnoxid und Zinkoxid auf 100 Massenanteile wenigstens eines Polyesters eingesetzt werden mit der Maßgabe eines ΔE <30 zu den L*a*b* Koordinaten einer mit "2" beginnenden Farbnummer der RAL-Farbtabelle, wobei Polyester vorzugsweise für ein $C_2$-$C_{10}$-Polyalkylenterephthalat, insbesondere Polybutylenterephthalat, oder Polycarbonat steht.

Die Zubereitung erfindungsgemäßer Polyester basierter Polymerzusammensetzungen für die Herstellung von Erzeugnissen, vorzugsweise Hochvoltkomponenten, insbesondere Hochvoltkomponenten für die Elektromobilität, erfolgt durch Mischen der als Edukte einzusetzenden Komponenten A) Polyester und B) wenigstens einem Pigmentsystems auf Basis anorganischer Mischoxide enthaltend Titandioxid, Zinnoxid und Zinkoxid in wenigstens einem Mischwerkzeug wobei auf 100 Massenanteile Komponente A) 0,01 bis 5 Massenanteile, besonders bevorzugt 0,01 bis 3 Massenanteile von Komponente B) eingesetzt werden und die Erzeugnisse, Hochvoltkomponenten oder Hochvoltkomponenten für die Elektromobilität ein ΔE <30 zu den L*a*b* Koordinaten einer mit "2" beginnenden Farbnummer der RAL-Farbtabelle aufweisen.

Durch das Mischen werden als Zwischenprodukte, auf den erfindungsgemäßen Polymerzusammensetzungen basierende, Formmassen erhalten. Diese Formmassen können entweder ausschließlich aus den Komponenten A) und B) bestehen, oder aber zusätzlich zu den Komponenten A) und B) noch wenigstens eine weitere Komponente enthalten. Im Falle erfindungsgemäßer Hochvoltkomponenten oder Hochvoltkomponenten für die Elektromobilität erfolgt die Zugabe wenigstens einer weiteren Komponente mit der Maßgabe eines ΔE <30 zu den L*a*b* Koordinaten einer mit "2" beginnenden Farbnummer der RAL-Farbtabelle.

Aus den oben genannten Gründen wird vorzugsweise auf den Einsatz Antimon-basierter Komponenten, insbesondere auf den Einsatz Antimontrioxid-haltiger Derivate, verzichtet.

## Weitere bevorzugte Ausführungsformen der Erfindung

In einer bevorzugten Ausführungsform betrifft die Erfindung **Polymerzusammensetzungen** enthaltend zusätzlich zu den Komponenten A) und B) noch C) wenigstens einen **Füll und/oder Verstärkungsstoff,** bevorzugt zu 1 bis 150 Massenanteilen, besonders bevorzugt zu 5 bis 80 Massenanteilen, ganz besonders bevorzugt zu 10 bis 50 Massenanteilen, jeweils bezogen auf 100 Massenanteile der Komponente A).

In einer bevorzugten Ausführungsform betrifft die Erfindung **Hochvoltkomponenten,** insbesondere Hochvoltkomponenten für die Elektromobilität, enthaltend zusätzlich zu den Komponenten A) und B) noch C) wenigstens einen **Füll und/oder Verstärkungsstoff,** bevorzugt zu 1 bis 150 Massenanteilen, besonders bevorzugt zu 5 bis 80 Massenanteilen, ganz besonders bevorzugt zu 10 bis 50 Massenanteilen, jeweils bezogen auf 100 Massenanteile der Komponente A) mit der Maßgabe eines $\Delta E < 30$ zu den L*a*b* Koordinaten einer mit "2" beginnenden Farbnummer der RAL-Farbtabelle.

In einer weiteren bevorzugten Ausführungsform betrifft die Erfindung **Polymerzusammensetzungen** enthaltend zusätzlich zu den Komponenten A), B) und C) oder anstelle von C) noch D) wenigstens ein **Flammschutzmittel,** bevorzugt zu 3 bis 100 Massenanteilen, besonders bevorzugt zu 5 bis 80 Massenanteilen, ganz besonders bevorzugt zu 10 bis 50 Massenanteilen, jeweils bezogen auf 100 Massenanteile der Komponente A

In einer weiteren bevorzugten Ausführungsform betrifft die Erfindung Hochvoltkomponenten, insbesondere Hochvoltkomponenten für die Elektromobilität, enthaltend zusätzlich zu den Komponenten A), B) und C) oder anstelle von C) noch D) wenigstens ein Flammschutzmittel, bevorzugt zu 3 bis 100 Massenanteilen, besonders bevorzugt zu 5 bis 80 Massenanteilen, ganz besonders bevorzugt zu 10 bis 50 Massenanteilen, jeweils bezogen auf 100 Massenanteile der Komponente A) mit der Maßgabe eines $\Delta E < 30$ zu den L*a*b* Koordinaten einer mit "2" beginnenden Farbnummer der RAL-Farbtabelle.

In einer weiteren bevorzugten Ausführungsform betrifft die Erfindung Polymerzusammensetzungen enthaltend zusätzlich zu den Komponenten A), B), C), D) oder anstelle von C) und/oder D) noch E) wenigstens ein weiteres von den Komponenten B), C) und D) verschiedenes Additiv, bevorzugt zu 0,01 bis 80 Massenanteile, besonders bevorzugt zu 0,05 bis 50 Massenanteile, ganz besonders bevorzugt zu 0,1 bis 30 Massenanteile, jeweils bezogen auf 100 Massenanteile der Komponente A).

In einer weiteren bevorzugten Ausführungsform betrifft die Erfindung Hochvoltkomponenten, insbesondere Hochvoltkomponenten für die Elektromobilität, enthaltend zusätzlich zu den Komponenten A), B), C), D) oder anstelle von C) und/oder D) noch E) wenigstens ein weiteres von den Komponenten B), C) und D) verschiedenes Additiv, bevorzugt zu 0,01 bis 80 Massenanteile, besonders bevorzugt zu 0,05 bis 50 Massenanteile, ganz besonders bevorzugt zu 0,1 bis 30 Massenanteile, jeweils bezogen auf 100 Massenanteile der Komponente A) mit der Maßgabe eines $\Delta E < 30$ zu den L*a*b* Koordinaten einer mit "2" beginnenden Farbnummer der RAL-Farbtabelle.

**Komponente A)**

**Polyalkylenterephthalate als Komponente A)**

Erfindungsgemäß vorzugsweise als Komponente A) einzusetzende Polyester sind $C_2$-$C_{10}$-Polyalkylenterephthalate bzw. Reaktionsprodukte aus einem Alkoholteil mit 2 bis 10 C-Atomen im Alkoholteil und der Terephthalsäure. $C_2$-$C_{10}$-Polyalkylenterephthalate sind dem Fachmann bekannt und in der Literatur hinreichend beschrieben. Sie enthalten einen aromatischen Ring in der Hauptkette, der von der Terephthalsäure stammt, und einen aliphatischen Teil, der von einer Dihydroxyverbindung stammt. Der aromatische Ring der Terephthalsäure kann auch substituiert sein. Bevorzugte Substituenten sind Halogene oder $C_1$-$C_4$-Alkylgruppen. Bevorzugte Halogene sind Chlor oder Brom. Bevorzugte $C_1$-$C_4$-Alkylgruppen sind Methyl-, Ethyl-, n-Propyl- oder n-, i- bzw. t-Butylgruppen.

Als Komponente A) vorzugsweise einzusetzende $C_2$-$C_{10}$-Polyalkylenterephthalate können durch Umsetzung von aromatischen Dicarbonsäuren, deren Estern oder anderen esterbildenden Derivaten mit aliphatischen Dihydroxyverbindungen in dem Fachmann bekannter Weise hergestellt werden.

Im Falle der als Komponente A) einzusetzenden $C_2$-$C_{10}$-Polyalkylenterephthalate kann ein Teil der zu deren Herstellung zu verwendenden Terephthalsäure, bis zu 30 mol-%, durch 2,6-Naphthalindicarbonsäure, oder Isophthalsäure oder deren Mischungen ersetzt werden. Bis zu 70 mol-%, vorzugsweise nicht mehr als 10 mol-% der Terephthalsäure können durch aliphatische oder cycloaliphatische Dicarbonsäuren wie Adipinsäure, Azelainsäure, Sebacinsäure, Dodecandisäuren und Cyclohexan-dicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt. Besonders bevorzugte Polyalkylenterephthalate leiten sich von Alkandiolen mit 2 bis 4 C-Atomen ab. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-Pentandiol als weitere Monomereinheiten enthalten.

Vorzugsweise weisen als Komponente A) einzusetzende $C_2$-$C_{10}$-Polyalkylenterephthalate eine nach ISO 1628

zu bestimmende Viskositätszahl m Bereich von 50 bis 220, vorzugsweise im Bereich von 80 bis 160 auf, wobei in einer 0,5 gew.-%igen Lösung in einem Phenol/o-Dichlorbenzolgemisch, Gew.-Verh. 1:1 bei 25°C, gemessen wird.

Erfindungsgemäß als Komponente A) bevorzugt einzusetzende $C_2$-$C_{10}$-Polyalkylenterephthalate weisen vorzugsweise einen Carboxylendgruppengehalt von bis zu 100 mval/kg Polyester, besonders bevorzugt von bis zu 50 mval/kg Polyester und insbesondere bevorzugt von bis zu 40 mval/kg Polyester auf. Derartige $C_2$-$C_{10}$-Polyalkylenterephthalate können beispielsweise nach dem Verfahren der DE-A 44 01 055 hergestellt werden. Der Carboxylendgruppengehalt wird üblicherweise durch Titrationsverfahren, insbesondere Potentiometrie, bestimmt.

Insbesondere bevorzugte und als Komponente A) einzusetzende $C_2$-$C_{10}$-Polyalkylenterephthalate werden mit Ti-Katalysatoren hergestellt. Diese weisen nach der Polymerisation vorzugsweise einen restlichen Ti-Gehalt von ≤250 ppm, besonders bevorzugt von <200 ppm, ganz besonders bevorzugt von <150 ppm auf.

Das erfindungsgemäß als Komponente A) bevorzugt einzusetzende Polybutylenterephthalat (PBT) [CAS Nr. 24968-12-5] wird aus Terephthalsäure oder ihren reaktionsfähigen Derivaten und Butandiol nach bekannten Methoden hergestellt (Kunststoff-Handbuch, Bd. VIII, S. 695-743, Karl Hanser Verlag, München 1973).

Bevorzugt enthält das als Komponente A) einzusetzende PBT mindestens 80 Mol-%, vorzugsweise mindestens 90 Mol-%, bezogen auf die Dicarbonsäure, Terephthalsäurereste.

Das erfindungsgemäß bevorzugt als Komponente A) einzusetzende PBT kann in einer Ausführungsform neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, insbesondere Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, Cyclohexandicarbonsäure, 2,5-Furandicarbonsäure.

Das erfindungsgemäß bevorzugt als Komponente A) einzusetzende PBT kann in einer Ausführungsform neben Butandiol bis zu 20 Mol-% andere aliphatische Diole mit 3 bis 12 C-Atomen oder bis zu 20 Mol -% cycloaliphatische Diole mit 6 bis 21 C-Atomen enthalten, bevorzugt Reste von Propandiol-1,3, 2-Ethylpropandiol-1,3, Neopentylglykol, Pentandiol-1,5, Hexandiol-1.6, 1,4-Cyclohexandimethanol, 3-Methylpentandiol-2,4, 2-Methylpentandiol-2,4, 2,2,4-Trimethylpentandiol-1,3, 2,2,4-Trimethylpentandiol-1,5, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethylcyclobutan,2,2-bis-(3-β-hydroxyethoxyphenyl)-propan und 2,2-bis-(4-hydroxypropoxyphenyl)-propan.

Bevorzugt als Komponente A) einzusetzendes PBT hat eine intrinsische Viskosität nach EN-ISO 1628/5 im Bereich von 40 bis 170$cm^3$/g, besonders bevorzugt im Bereich von 50 bis 150$cm^3$/g, ganz besonders bevorzugt im Bereich von 65 bis 135$cm^3$/g, jeweils gemessen im Ubbelohde Viskosimeter in Phenol/o-Dichlorbenzol (1:1 Gew.-Teile) bei 25°C. Die intrinsische Viskosität *iV,* auch als Staudinger-Index oder Grenzviskosität bezeichnet, ist nach der Mark-Houwink-Gleichung proportional zur mittleren Molekülmasse und ist die Extrapolation der Viskositätszahl VN für den Fall verschwindender Polymerkonzentrationen. Sie kann aus Messreihen oder durch die Verwendung geeigneter Näherungsverfahren (z. B. Billmeyer) abgeschätzt werden. Die VN [ml/g] erhält man aus der Messung der Lösungsviskosität im Kapillar-Viskosimeter, beispielsweise Ubbelohde-Viskosimeter. Die Lösungsviskosität ist ein Maß für das mittlere Molekulargewicht eines Kunststoffs. Die Bestimmung erfolgt an gelöstem Polymer, wobei unterschiedliche Lösungsmittel (m-Kresol, Tetrachlorethan, Phenol, 1,2-Dichlorbenzol, etc) und Konzentrationen zum Einsatz kommen. Durch die Viskositätszahl VN ist eine Kontrolle der Verarbeitungs- und Gebrauchseigenschaften von Kunststoffen möglich. Eine thermische Beanspruchung des Polymers, Alterungsvorgänge oder das Einwirken von Chemikalien, Bewitterung und Licht können durch vergleichende Messungen untersucht werden. Siehe hierzu auch: http://de.wikipedia.org/wiki/Visko simetrie und "http://de.wikipedia.org/wiki/Mark-Houwink-Gleichung".

Das bevorzugt als Komponente A) einzusetzende PBT kann auch im Gemisch mit anderen Polymeren eingesetzt werden. Die Herstellung erfindungsgemäß einzusetzender PBT Blends erfolgt durch Compoundieren. Während einer solchen Compoundierung können zudem übliche Additive, insbesondere Entformungsmittel oder Elastomere in der Schmelze zugemischt werden, wodurch die Eigenschaften der Blends verbessert werden.

Erfindungsgemäß bevorzugt einzusetzendes PBT kann als Pocan® B 1300 von der Lanxess Deutschland GmbH, Köln, bezogen werden.

**Polycarbonat als Komponente A)**

Erfindungsgemäß bevorzugt kann als Polyester der Komponente A) auch wenigstens ein Thermoplast aus der Gruppe der Polycarbonate eingesetzt werden.

Erfindungsgemäß bevorzugt einzusetzende Polycarbonate sind solche Homopolycarbonate oder Copolycarbonate auf Basis von Bisphenolen der allgemeinen Formel (I),

HO-Z-OH (I)

worin Z für einen divalenten organischen Rest mit 6 bis 30 C-Atomen steht der eine oder mehrere aromatische Gruppen

enthält.

Bevorzugt wird als Komponente A) wenigstens ein Polycarbonat auf Basis von Bisphenolen der Formel (Ia) eingesetzt worin

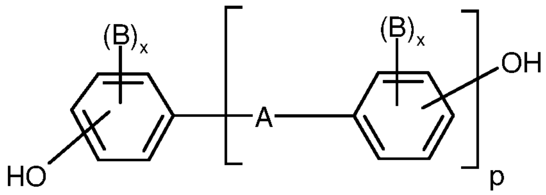

(Ia),

A für eine Einfachbindung oder für einen Rest der Reihe $C_1$-$C_5$-Alkylen, $C_2$-$C_5$-Alkyliden, $C_5$-$C_6$-Cycloalkyliden, -O-, -SO-, -CO-, -S-, $-SO_2-$, $C_6$-$C_{12}$-Arylen steht, woran weitere aromatische, gegebenenfalls Heteroatome enthaltende, Ringe kondensiert sein können,

oder A für einen Rest der Formel (II) oder (III) steht

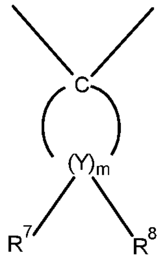

(II)

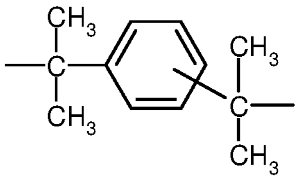

(III)

worin

$R^7$ und $R^8$ für jedes Y individuell wählbar sind und unabhängig voneinander für Wasserstoff oder $C_1$-$C_6$-Alkyl stehen, vorzugsweise für Wasserstoff, Methyl oder Ethyl stehen,

B jeweils für $C_1$-$C_{12}$-Alkyl, vorzugsweise für Methyl, Halogen, vorzugsweise Chlor und/oder Brom, steht,

x jeweils unabhängig voneinander für 0, 1 oder 2 steht,

p für 1 oder 0 steht,

Y für Kohlenstoff steht, und

m für eine ganze Zahl von 4 bis 7 steht, bevorzugt für 4 oder 5 steht, mit der Maßgabe, dass an mindestens einem Y (Kohlenstoffatom) $R^7$ und $R^8$ gleichzeitig für Alkyl stehen.

In bevorzugter Ausführungsform gilt:

wenn m für 4 steht, steht Y für $-CR^7R^8-CR^7R^8-CR^7R^8-CR^7R^8-$;

wenn m für 5 steht, steht Y für $-CR^7R^8-CR^7R^8-CR^7R^8-CR^7R^8-CR^7R^8-$;

wenn m für 6 steht, steht Y für $-CR^7R^8-CR^7R^8-CR^7R^8-CR^7R^8-CR^7R^8-CR^7R^8-$; und

wenn m für 7 steht, steht Y für $-CR^7R^8-CR^7R^8-$ $CR^7R^8-CR^7R^8-CR^7R^8-$ $CR^7R^8-CR^7R^8-$.

Bevorzugte Bisphenole enthaltend die allgemeine Formel (II) sind Bisphenole aus der Gruppe Dihydroxydiphenyle, Bis-(hydroxyphenyl)-alkane, Bis-(hydroxyphenyl)-cyclo-alkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und α,α'-Bis-(hydroxyphenyl)-diisopropylbenzole.

Auch Derivate der genannten Bisphenole, die vorzugsweise durch Alkylierung oder Halogenierung an den aromatischen Ringen der genannten Bisphenole erhältlich sind, sind bevorzugt einzusetzende Bisphenole enthaltend die allgemeinen Formel (II).

Besonders bevorzugte Bisphenole enthaltend die allgemeine Formel (II) sind Hydrochinon, Resorcin, 4,4'-Dihydroxydiphenyl, Bis-(4-hydroxyphenyl)sulfid, Bis-(4-hydroxyphenyl)sulfon, Bis-(3,5-dimethyl-4-hydroxyphenyl)-methan, Bis-(3,5-dimethyl-4-hydroxyphenyl)-sulfon, 1,1-Bis-(3,5-dimethyl-4-hydroxyphenyl)-p/m-diisopropylbenzol, 1,1-Bis-(4-hydroxyphenyl)-1-phenyl-ethan, 1,1-Bis-(3,5-dimethyl-4-hydroxyphenyl)-cyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan. 1,1-Bis-(4-hydroxyphenyl)-cyclohexan, 1,1-Bis-(4-hydroxyphenyl)-3,3,5-trimethylcyclohexan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, α,α'-Bis-(4-hydroxyphenyl)-o-diisopropylbenzol, α,α'-Bis-(4-hydroxyphenyl)-m-diisopropylbenzol (d. h. Bisphenol M), α,α'-Bis-(4-hydroxyphenyl)-p-diisopropylbenzol und Indanbisphenol.

Die beschriebenen Bisphenole gemäß der allgemeinen Formel (II) können nach dem Fachmann bekannten Verfahren, vorzugsweise aus den entsprechenden Phenolen und Ketonen, hergestellt werden.

Auch die als Komponente A) einzusetzenden Polycarbonate können nach bekannten Verfahren hergestellt werden. Bevorzugte Verfahren zur Herstellung von Polycarbonaten sind zum Beispiel die Herstellung aus Bisphenolen mit Phosgen nach dem Phasengrenzflächenverfahren, oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Die genannten Bisphenole und Verfahren zu ihrer Herstellung sind zum Beispiel beschrieben in der Monographie H. Schnell, "Chemistry and Physics of Polycarbonates", Polymer Reviews, Band 9, S. 77-98, Interscience Publishers, New York, London, Sidney, 1964 und in US-A 3 028 635, in US-A 3 062 781, in US-A 2 999 835, in US-A 3 148 172, in US-A 2 991 273, in US-A 3 271 367, in US-A 4 982 014, in US-A 2 999 846, in DE-A 1 570 703, in DE-A 2 063 050, in DE-A 2 036 052, in DE-A 2 211 956, in DE-A 3 832 396, und in FR-A 1 561 518 sowie in den Japanischen Offenlegungsschriften mit den Anmeldenummern JP-A 62039 1986, JP-A 62040 1986 und JP-A 105550 1986.

1,1-Bis-(4-hydroxyphenyl)-3,3,5-trimethylcyclohexan und seine Herstellung ist z.B. beschrieben in US-A 4 982 014.

Indanbisphenole und ihre Herstellung sind zum Beispiel beschrieben in US-A 3 288 864, in JP-A 60 035 150 und in US-A 4 334 106. Indanbisphenole können zum Beispiel aus Isopropenylphenol oder dessen Derivaten oder aus Dimeren des Isopropenylphenols oder dessen Derivaten in Gegenwart eines Friedel-Craft-Katalysators in organischen Lösungsmitteln hergestellt werden.

Das Schmelzeumesterungsverfahren ist beschrieben in H. Schnell, "Chemistry and Physics of Polycarbonates", Polymer Reviews, Band 9, S. 44 bis 51, Interscience Publishers, New York, London, Sidney, 1964 sowie in DE-A 1 031 512.

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, insbesondere Kohlensäureester, und die Bisphenole umkristallisiert, wäscht oder destilliert.

Die erfindungsgemäß bevorzugt einzusetzenden Polycarbonate weisen vorzugsweise ein Gewichtsmittel der molaren Masse $M_w$ im Bereich von 10 000 bis 200 000 g/mol auf, welches sich durch Ultrazentrifugation (siehe K. Schilling, Analytische Ultrazentrifugation, Nanolytics GmbH, Dallgow, Seiten 1-15) oder Streulichtmessung gemäß DIN EN ISO 16014-5:2012-10 bestimmen lässt. Besonders bevorzugt weisen die einzusetzenden Polycarbonate ein Gewichtsmittel der molaren Masse im Bereich von 12.000 bis 80.000 g/mol, insbesondere bevorzugt ein Gewichtsmittel der molaren Masse im Bereich von 20.000 bis 35.000 g/mol.

Die mittlere molare Masse der erfindungsgemäß bevorzugt als Komponente A) einzusetzenden Polycarbonate kann vorzugsweise in bekannter Weise durch eine entsprechende Menge an Kettenabbrechern eingestellt werden. Die Kettenabbrecher können einzeln oder als Mischung verschiedener Kettenabbrecher eingesetzt werden.

Bevorzugte Kettenabbrecher sind sowohl Monophenole als auch Monocarbonsäuren. Bevorzugte Monophenole sind Phenol, p-Chlorphenol, p-tert.-Butylphenol, Cumylphenol oder 2,4,6-Tribromphenol, sowie langkettige Alkylphenole, insbesondere 4-(1,1,3,3-Tetramethylbutyl)-phenol oder Monoalkylphenole bzw. Dialkylphenole mit insgesamt 8 bis 20 C-Atomen in den Alkylsubstituenten, insbesondere 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Bevorzugte Monocarbonsäuren sind Benzoesäure, Alkylbenzoesäuren oder Halogenbenzoesäuren.

Besonders bevorzugte Kettenabbrecher sind Phenol, p-tert.-Butylphenol, 4-(1,1,3,3-Tetramethylbutyl)-phenol oder Cumylphenol.

Die Menge an einzusetzenden Kettenabbrechern liegt bevorzugt im Bereich von 0,25 bis 10 Mol-%, bezogen auf die Summe der jeweils eingesetzten Bisphenole.

Die erfindungsgemäß bevorzugt als Komponente A) einzusetzenden Polycarbonate können in bekannter Weise verzweigt sein, vorzugsweise durch den Einbau von trifunktionellen oder mehr als trifunktionellen Verzweigern. Bevorzugte Verzweiger sind solche mit drei oder mehr als drei phenolischen Gruppen oder solche mit drei oder mehr als drei Carbonsäuregruppen.

Besonders bevorzugte Verzweiger sind Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methylbenzol, 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid oder $\alpha$, $\alpha'$,$\alpha''$-Tris-(4-hydroxyphenol)-1,3,5-triisopropylbenzol.

Ganz besonders bevorzugte Verzweiger sind 1,1,1-Tris-(4-hydroxyphenyl)-ethan oder 3,3-Bis-(3-methyl-4-hydroxyphenyl)-2-oxo-2,3-dihydroindol.

Die Menge der einzusetzenden Verzweiger liegt vorzugsweise im Bereich von 0,05 Mol-% bis 2 Mol-%, bezogen auf Mole eingesetzter Bisphenole.

Vorzugsweise werden die Verzweiger im Falle der Herstellung des Polycarbonates nach dem Phasengrenzflächenverfahren mit den Bisphenolen und den Kettenabbrechern in der wässrig alkalischen Phase vorgelegt, oder in einem organischen Lösungsmittel gelöst zusammen mit den Kohlensäurederivaten zugegeben. Im Falle des Umesterungsverfahrens werden die Verzweiger bevorzugt zusammen mit den Dihydroxyaromaten oder Bisphenolen dosiert.

Bevorzugt einzusetzende Katalysatoren bei der Herstellung von erfindungsgemäß bevorzugt als Komponente A) einzusetzendem Polycarbonat nach dem Schmelzeumesterungsverfahren sind Ammoniumsalze und Phosphoniumsalze, wie sie beispielsweise in US-A 3 442 864, JP-A-14742/72, US-A 5 399 659 oder DE-A 19 539 290 beschrieben werden.

Copolycarbonate können in einer bevorzugten Ausführungsform auch als Komponente A) eingesetzt werden. Copolycarbonate im Sinne der Erfindung sind insbesondere Polydiorganosiloxan-Polycarbonat-Blockcopolymere, deren Gewichtsmittel der molaren Masse $M_w$ bevorzugt im Bereich von 10 000 bis 200 000 g/mol, besonders bevorzugt im Bereich von 20 000 bis 80 000 g/mol liegt, ermittelt durch Gelchromatographie gemäß DIN EN ISO 16014-5:2012-10 nach vorheriger Eichung durch Lichtstreuungsmessung oder Ultrazentrifugation. Der Gehalt an aromatischen Carbonatstruktureinheiten in den Polydiorganosiloxan-Polycarbonat-Blockcopolymeren liegt vorzugsweise im Bereich von 75 bis 97,5 Gew.-%, besonders bevorzugt im Bereich von 85 bis 97 Gew.-%. Der Gehalt an Polydiorganosiloxanstruktureinheiten in den Polydiorganosiloxan-Polycarbonat-Blockcopolymeren liegt vorzugsweise im Bereich von 25 bis 2,5 Gew.-%, besonders bevorzugt im Bereich von 15 bis 3 Gew.-%. Die Polydiorganosiloxan-Polycarbonat-Blockcopolymeren können vorzugsweise ausgehend von $\alpha,\omega$-Bishydroxyaryloxy-endgruppen-haltigen Polydiorganosiloxanen mit einem mittleren Polymerisationsgrad $P_n$ im Bereich von 5 bis 100, besonders bevorzugt mit einem mittleren Polymerisationsgrad $P_n$ im Bereich von 20 bis 80, hergestellt werden.

Besonders bevorzugt als Komponente A) einzusetzende Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan (= Bisphenol TMC). Erfindungsgemäß bevorzugt als Komponente A) einzusetzende Polycarbonate sind beispielsweise unter der Marke Makrolon® bei der Covestro AG, Leverkusen erhältlich.

In einer Ausführungsform können den als Komponente A) einzusetzenden Polycarbonaten übliche Additive, insbesondere Entformungsmittel, in der Schmelze zugemischt oder auf der Oberfläche aufgebracht werden. Bevorzugt enthalten die als Komponente A) einzusetzenden Polycarbonate bereits Entformungsmittel vor einer sich anschließenden Compoundierung mit den anderen Komponenten, wobei der Fachmann unter Compoundierung (aus dem Englischen: *Compound* = "Mischung") einen Begriff aus der Kunststofftechnik versteht, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Eine Compoundierung erfolgt vorzugsweise in Extrudern, besonders bevorzugt in gleichläufigen Doppelschneckenextrudern, gegenläufigen Doppelschneckenextrudern, Planetwalzenextrudern oder Ko-Knetern und umfasst die Verfahrensoperationen Fördern, Aufschmelzen, Dispergieren, Mischen, Entgasen und Druckaufbau.

In einer bevorzugten Ausführungsform können als Komponente A) aber auch Blends von Polycarbonat und Polyalkylenterephthalaten eingesetzt werden, die ebenfalls bei der Covestro AG unter der Marke Makroblend® angeboten werden. Bevorzugt handelt es sich hierbei um PC-PET-Blends, PC-PBT-Blends oder um PC-PCT-G-Blends, wobei PC für Polycarbonat, PET für Polyethylenterephthalat, PBT für Polybutylenterephthalat und PCT für Polycyclohexylendimethylenterephthalat steht.

Dem als Komponente A) einzusetzenden Polyester können übliche Additive, vorzugsweise dem Fachmann bekannte Entformungsmittel, Stabilisatoren und/oder Fließhilfsmittel bereits in der Schmelze zugemischt werden.

**Komponente B)**

Erfindungsgemäß wird als Komponente B) wenigstens ein Pigmentsystem auf Basis anorganischer Mischoxide enthaltend Titandioxid, Zinnoxid und Zinkoxid eingesetzt. Ein erfindungsgemäß einzusetzendes Pigmentsystem auf Basis anorganischer Mischoxide enthaltend Titandioxid, Zinnoxid und Zinkoxid ist aus EP 0 113 229 B1 bekannt, ebenso dessen Herstellung. Das erfindungsgemäß als Komponente B) einzusetzende Pigment auf Basis anorganischer Mischoxide wird in EP 0 113 229 B1 auch als Pigmentsystem bezeichnet, weshalb in der vorliegenden Beschreibung beide Begriffe synonym verwendet werden.

Die anorganischen Mischoxide, in der EP 0 113 229 B1 auch als Komplexe bezeichnet, basieren auf Zinnoxid(en), Titandioxid und Zinkoxid(en).

Erfindungsgemäß bevorzugt sind Polymerzusammensetzungen bzw. Hochvoltkomponenten, insbesondere Hochvoltkomponenten für die Elektromobilität, enthaltend als Komponente B) Pigmentsysteme bzw. Laserbeschriftungsadditive in Form von Mischoxiden enthaltend Titandioxid, Zinnoxid und Zinkoxid mit der Maßgabe eines $\Delta E < 10$, insbesondere eines $\Delta E < 5$, zu den L*a*b* Koordinaten einer mit "2" beginnenden Farbnummer der RAL-Farbtabelle.

Besonders bevorzugt als Komponente B) einzusetzende Pigmentsysteme bzw. Laserbeschriftungsadditive sind Mischoxide enthaltend Titandioxid, Zinnoxid und Zinkoxid der CAS-Nr. 923954-49-8. Erfindungsgemäß insbesondere bevorzugt als Komponente B) sind C.I. Pigment Orange 82 [CAS-Nr. 2170864-77-2] oder C.I.Pigment Yellow 216 [CAS-Nr. 817181-98-9] einzusetzen. Bezüglich der C.I. Klassifizierung siehe:
**https://de.wikipedia.org/wiki/Colour_Index.**

Pigment Orange 82 kann beispielsweise unter dem Namen Sicopal® Orange K2430 bei der Firma BASF SE, Ludwigshafen, Deutschland bezogen werden. Pigment Yellow 216 kann beispielsweise unter dem Namen Orange 10P340 bei der Firma Shepherd, Gent, Belgien bezogen werden.

Das als Komponente B) einzusetzende wenigstens eine Pigmentsystem auf Basis anorganischer Mischoxide aus Titandioxid, Zinnoxid und Zinkoxid kann erfindungsgemäß einzeln oder im Gemisch mit wenigstens einem weiteren anorganischen Mischoxid aus Titandioxid, Zinnoxid und Zinkoxideingesetzt werden, mit der Maßgabe eines $\Delta E < 30$ zu einer Farbnummer beginnend mit einer "2" in der RAL-Farbtabelle, vorzugsweise zu einer der Farbnummern RAL 2000, RAL2003, RAL2004, RAL2007, RAL2008, RAL2009, RAL2010 oder RAL2011, besonders bevorzugt zu einer der Farbnummern RAL2003, RAL2004, RAL2008 oder RAL2009, ganz besonders bevorzugt zur Farbnummer RAL 2003.

Die erfindungsgemäß einzusetzende Komponente B) kann direkt als Pulver, oder aber in Form einer Paste oder eines Masterbatches, Kompaktes oder Konzentrates in Komponente A) eingesetzt werden, wobei Masterbatche bevorzugt sind und Masterbatche in einer der jeweiligen Komponente A) entsprechenden Polymermatrix besonders bevorzugt sind. Der Fachmann versteht unter dem Begriff Masterbatch Kunststoffadditive in Form von Granulaten, hier mit einem Gehalt an Farbmitteln oder Additiven, die höher sind als in der Endanwendung. Sie werden dem Polymer bzw. Kunststoff (Rohpolymer) zum Einfärben oder zur Veränderung seiner Eigenschaften beigemischt. Im Gegensatz zu pulverförmigen Zusatzstoffen erhöhen Masterbatche die technische Prozesssicherheit und sind zudem gut zu verarbeiten.

**Komponente C)**

In bevorzugter Ausführungsform wird als Komponente C) wenigstens ein **Füllstoff oder Verstärkungsstoff** eingesetzt. Dabei können auch Mischungen aus zwei oder mehreren unterschiedlichen Füllstoffen oder Verstärkungsstoffen eingesetzt werden.

Vorzugsweise wird wenigstens ein Füll- oder Verstärkungsstoff aus der Gruppe Kohlenstofffasern [CAS Nr. 7440-44-0], Glaskugeln oder Voll- oder Hohlglaskugeln, Glasfasern, gemahlenes Glas, amorphes Quarzglas, Aluminium-Borsilikatglas mit einem Alkaligehalt 1% (E-Glas) [CAS Nr. 65997-17-3], amorphe Kieselsäure [CAS Nr. 7631-86-9], Quarzmehl [CAS Nr. 14808-60-7], Calciumsilicat [CAS Nr. 1344-95-2], Calciummetasilicat [CAS Nr. 10101-39-0], Magnesiumcarbonat [CAS Nr. 546-93-0], Kaolin [CAS Nr. 1332-58-7], calciniertes Kaolin [CAS Nr. 92704-41-1], Kreide [CAS Nr.1317-65-3], Kyanit [CAS Nr. 1302-76-7], gepulverter oder gemahlener Quarz [CAS Nr. 14808-60-7], Glimmer [CAS Nr. 1318-94-1], Phlogopit [CAS Nr. 12251-00-2], Bariumsulfat [CAS Nr. 7727-43-7], Feldspat [CAS Nr. 68476-25-5], Wollastonit [CAS Nr. 13983-17-0], Montmorillonit [CAS Nr. 67479-91-8], Pseudoböhmit der Formel AIO(OH), Magnesiumcarbonat [CAS Nr. 12125-28-9] und Talkum [CAS Nr. 14807-96-6] eingesetzt.

Unter den faserförmigen Füllstoffen oder Verstärkungsstoffen sind Glasfasern und Wollastonit besonders bevorzugt, wobei Glasfasern ganz besonders bevorzugt sind. Es können auch Kohlenstofffasern als Füllstoff oder Verstärkungsstoff eingesetzt werden.

Bezüglich der Glasfasern unterscheidet der Fachmann gemäß **"http://de.wikipedia.org/wiki/Faser-Kunststoff-Verbund"** geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Kurzfasern werden vorzugsweise in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200 μm liegt.

Erfindungsgemäß bevorzugt als Komponente C) einzusetzende Glasfasern sind geschnittene Langglasfasern mit einer mittels Laserdiffraktometrie gemäß **ISO 13320** zu bestimmenden mittleren Ausgangslänge im Bereich von 1 bis 50 mm, besonders bevorzugt im Bereich von 1 bis 10 mm, ganz besonders bevorzugt im Bereich von 2 bis 7 mm. Zu Laserbeugungs-Partikelgrößenbestimmung/Laserdiffraktometrie gemäß der Norm **ISO 13320** siehe: **https://de.wikipedia.org/wiki/Laserbeugungs-Partikelgr%C3%B6%C3%9Fenanalyse** Bevorzugte, als Komponente C) einzusetzende Glasfasern haben einen mittels Laserdiffraktometrie gemäß **ISO 13320** zu bestimmenden mittleren Faserdurchmesser im Bereich von 7 bis 18 μm, besonders bevorzugt im Bereich von 9 bis 15 μm.

Die als Komponente C) einzusetzenden Füllstoffe, vorzugsweise Glasfasern, werden in einer bevorzugten Ausführungsform mit einem geeigneten Schlichtesystem oder einem Haftvermittler bzw. Haftvermittlersystem ausgerüstet. Bevorzugt wird ein Schlichtesystem bzw. ein Haftvermittler auf Silanbasis eingesetzt. Besonders bevorzugte Haftvermittler auf Silanbasis für die Behandlung der Komponente C), insbesondere für die Behandlung von Glasfasern, sind Silanverbindungen der allgemeine Formel (V)

$$(X-(CH_2)_q)_k-Si-(O-CrH_{2r+1})_{4-k} \qquad (V)$$

worin

X für $NH_2$-, Carboxyl-, HO- oder

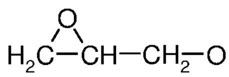

steht,

q in Formel (V) für eine ganze Zahl von 2 bis 10, bevorzugt 3 bis 4 steht,

r in Formel (V) für eine ganze Zahl von 1 bis 5, bevorzugt 1 bis 2 steht und

k in Formel (V) für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidyl- oder eine Carboxylgruppe enthalten, wobei Carboxylgruppen insbesondere ganz besonders bevorzugt sind.

Für die Ausrüstung der als Komponente C) einzusetzenden Füllstoffe, vorzugsweise Glasfasern, wird der Haftvermittler, bevorzugt die Silanverbindungen gemäß Formel (I), bevorzugt in Mengen im Bereich von 0,05 bis 2 Gew.-%, besonders bevorzugt in Mengen im Bereich von 0,25 bis 1,5 Gew.-% und ganz besonders bevorzugt in Mengen im Bereich von 0,5 bis 1 Gew.-%, jeweils bezogen auf 100 Gew.-% Komponente C), eingesetzt.

Die als Komponente C) vorzugsweise einzusetzenden Glasfasern können bedingt durch die Verarbeitung zur Zusammensetzung bzw. zum Erzeugnis in der Zusammensetzung bzw. im Erzeugnis kürzer sein, als die ursprünglich eingesetzten Glasfasern. So liegt der mittels hochauflösender Röntgencomputertomographie zu bestimmende arithmetische Mittelwert der Glasfaserlänge nach der Verarbeitung häufig nur noch im Bereich von 150 μm bis 300 μm.

Gemäß **"http://www.r-g.de/wiki/Glasfasern"** werden Glasfasern im Schmelzspinnverfahren (Düsenzieh-, Stabzieh- und Düsenblasverfahren) hergestellt. Beim Düsenziehverfahren fließt unter Ausnutzung der Schwerkraft

die heiße Glasmasse durch hunderte Düsenbohrungen einer Platinspinnplatte. Die Elementarfäden können in unbegrenzter Länge mit einer Geschwindigkeit von 3 - 4 km/Minute gezogen werden.

Der Fachmann unterscheidet verschiedene Glasfasersorten, wovon hier beispielsweise einige gelistet sind:

- E-Glas, das meistverwendete Material mit optimalem Preis-Leistungsverhältnis (E-Glas von R&G)
- H-Glas, Hohlglasfasern für reduziertes Gewicht (R&G Glashohlfasergewebe 160 g/m$^2$ und 216 g/m$^2$)
- R, S-Glas, für erhöhte mechanische Anforderungen (S2-Glas von R&G)
- D-Glas, Borsilicatglas für erhöhte elektrische Anforderungen
- C-Glas, mit erhöhter chemischer Widerstandsfähigkeit
- Quarzglas, mit hoher Temperaturbeständigkeit

Weitere Beispiele finden sich unter **"http://de.wikipedia.org/wiki/Glasfaser".** Für die Kunststoffverstärkung haben E-Glasfasern die größte Bedeutung erlangt. E steht für Elektro-Glas, da es ursprünglich vor allem in der Elektroindustrie eingesetzt wurde. Für die Produktion von E-Glas werden Glasschmelzen aus reinem Quarz mit Zusätzen aus Kalkstein, Kaolin und Borsäure hergestellt. Sie enthalten neben Siliziumdioxid unterschiedliche Mengen verschiedener Metalloxide. Die Zusammensetzung bestimmt die Eigenschaften der Produkte. Erfindungsgemäß bevorzugt wird wenigstens eine Sorte Glasfasern aus der Gruppe E-Glas, H-Glas, R,S-Glas, D-Glas, C-Glas und Quarzglas eingesetzt, besonders bevorzugt Glasfasern aus E-Glas.

Glasfasern aus E-Glas sind der am weitesten verbreitete Verstärkungswerkstoff. Die Festigkeitseigenschaften entsprechen denen von Metallen (z.B. Alu-Legierungen), wobei das spezifische Gewicht von E-Glasfasern enthaltenden Laminaten niedriger ist, als das der Metalle. E-Glasfasern sind unbrennbar, hitzefest bis ca. 400 °C und beständig gegen die meisten Chemikalien und Witterungseinflüsse.

Bevorzugt werden als Komponente C) ferner auch nadelförmige mineralische Füllstoffe eingesetzt. Unter nadelförmigen, mineralischen Füllstoffen wird erfindungsgemäß ein mineralischer Füllstoff mit stark ausgeprägtem nadelförmigen Charakter verstanden. Bevorzugt als Komponente C) einzusetzender nadelförmiger mineralischer Füllstoff ist Wollastonit. Bevorzugt weist der nadelförmige, mineralische Füllstoff ein mittels hochauflösender Röntgencomputertomographie zu bestimmendes Länge : Durchmesser - Verhältnis im Bereich von 2:1 bis 35:1, besonders bevorzugt im Bereich von 3:1 bis 19:1, insbesondere bevorzugt im Bereich von 4:1 bis 12:1 auf. Die mittels hochauflösender Röntgencomputertomographie zu bestimmende mittlere Teilchengröße der nadelförmigen, mineralischen Füllstoffe liegt bevorzugt bei kleiner 20 μm, besonders bevorzugt bei kleiner 15 μm, insbesondere bevorzugt bei kleiner 10 μm.

Bevorzugt wird als Komponente C) aber auch nicht-faserförmiges und nicht-geschäumtes gemahlenes Glas mit einer mittels Laserdiffraktometrie gemäß **ISO 13320** zu bestimmenden Teilchengrößenverteilung mit einem d90 im Bereich von 5 bis 250 μm eingesetzt, bevorzugt mit einem d90 im Bereich von 10 bis 150 μm, besonders bevorzugt mit einem d90 im Bereich von 15 bis 80 μm, ganz besonders bevorzugt mit einem d90 im Bereich von 16 bis 25 μm. Bezüglich der d90-Werte, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der d90-Wert diejenige Partikelgröße ist, unterhalb derer 90 % der Partikelmenge liegen.

Erfindungsgemäß bevorzugt ist ein nicht-faserförmiges und nicht-geschäumtes gemahlenes Glas von partikelförmiger, nicht zylindrischer Gestalt mit einem mittels Laserdiffraktometrie gemäß **ISO 13320** zu bestimmenden Längen- zu Dickenverhältnis kleiner 5, bevorzugt kleiner als 3, besonders bevorzugt kleiner 2. Der Wert Null ist selbstverständlich ausgeschlossen.

Das in einer Ausführungsform als Komponente C) besonders bevorzugt einzusetzende nicht-geschäumte und nicht faserförmige gemahlene Glas ist zudem dadurch gekennzeichnet, dass es nicht die für faserförmiges Glas typische Glasgeometrie mit zylindrischem oder ovalen Querschnitt mit einem mittels Laserdiffraktometrie gemäß **ISO 13320** zu bestimmenden Längen- zu Durchmesserverhältnis (L/D-Verhältnis) größer 5 aufweist.

Das in einer Ausführungsform erfindungsgemäß als Komponente C) besonders bevorzugt einzusetzende nicht-geschäumte und nicht-faserförmige gemahlene Glas wird bevorzugt durch Mahlung von Glas mit einer Mühle, bevorzugt einer Kugelmühle und besonders bevorzugt mit anschließender Sichtung bzw. Siebung erhalten. Bevorzugte Edukte für die Vermahlung des in einer Ausführungsform als Komponente C) einzusetzenden nichtfaserförmigem und nicht-geschäumten, gemahlenen Glas sind auch Glasabfälle, wie sie insbesondere bei der Herstellung von Glaserzeugnissen als unerwünschtes Nebenprodukt und / oder als nicht spezifikationsgerechtes Hauptprodukt (sogenannte Offspec-Ware) anfallen. Hierzu gehört insbesondere Abfall-, Recycling- und Bruchglas wie es insbesondere bei der Herstellung von

Fenster- oder Flaschenglas, sowie bei der Herstellung von glashaltigen Füll- und Verstärkungsstoffen, insbesondere in Form von sogenannten Schmelzekuchen, anfallen kann. Das Glas kann gefärbt sein, wobei nichtgefärbtes Glas als Ausgangsmaterial zum Einsatz als Komponente C) bevorzugt ist.

**Komponente D)**

In bevorzugter Ausführungsform wird als Komponente D) wenigstens ein Flammschutzmittel eingesetzt. Bevorzugte **Flammschutzmittel** sind von Komponente C) verschiedene mineralische Flammschutzmittel, stickstoffhaltige Flammschutzmittel oder phosphorhaltige Flammschutzmittel.

Unter den mineralischen Flammschutzmitteln ist Magnesiumhydroxid besonders bevorzugt. Magnesiumhydroxid [CAS Nr. 1309-42-8] kann aufgrund seiner Herkunft und Herstellungsweise verunreinigt sein. Typische Verunreinigungen sind z.B. Silicium-, Eisen-, Calcium- und/oder Aluminium-haltige Spezies, die beispielsweise in Form von Oxiden in den Magnesiumhydroxid-Kristallen eingelagert sein können. Das als mineralisches Flammschutzmittel einzusetzende Magnesiumhydroxid kann unbeschlichtet oder aber mit einer Schlichte versehen sein. Eine Schlichte fördert qualitätsbeeinflussend den mechanischen Verbund zwischen Kunststoff(matrix) und der mit Schlichte zu versehenden Komponente. Vorzugsweise wird das als mineralisches Flammschutzmittel vorzugsweise einzusetzende Magnesiumhydroxid mit Schlichten auf Basis von Stearaten oder Aminosiloxanen, besonders bevorzugt mit Aminosiloxanen versehen. Vorzugsweise als mineralisches Flammschutzmittel einzusetzendes Magnesiumhydroxid hat eine mittels Laserdiffraktometrie gemäß **ISO 13320** zu bestimmende mittlere Teilchengröße d50 im Bereich von 0,5 µm bis 6 µm, wobei ein d50 im Bereich von 0,7 µm bis 3,8 µm bevorzugt und ein d50 im Bereich von 1,0 µm bis 2,6 µm besonders bevorzugt ist.

Erfindungsgemäß als mineralisches Flammschutzmittel geeignete Magnesiumhydroxidtypen sind beispielsweise Magnifin® H5IV der Martinswerk GmbH, Bergheim, Deutschland oder Hidromag® Q2015 TC der Firma Penoles, Mexiko-Stadt, Mexico.

Bevorzugte stickstoffhaltige Flammschutzmittel sind die Reaktionsprodukte aus Trichlortriazin, Piperazin und Morpholin gemäß CAS Nr. 1078142-02-5, insbesondere MCA PPM Triazin HF der Fa. MCA Technologies GmbH, Biel-Benken, Schweiz, ferner Melamincyanurat und Kondensationsprodukte des Melamins, insbesondere Melem, Melam, Melon bzw. höherkondensierte Verbindungen dieses Typs. Bevorzugte anorganische stickstoffhaltige Verbindungen sind Ammoniumsalze.

Ferner können auch Salze aliphatischer und aromatischer Sulfonsäuren und mineralische Flammschutzadditive, insbesondere Aluminiumhydroxid oder Ca-Mg-Carbonat-Hydrate **(**DE-A 4 236 122**)** eingesetzt werden.

In Frage kommen für den Einsatz als Komponente D) ferner Flammschutzmittelsynergisten aus der Gruppe der sauerstoff- stickstoff- oder schwefelhaltigen Metallverbindungen. Bevorzugt sind dabei zinkfreie Verbindungen, insbesondere Molybdänoxid, Magnesiumoxid, Magnesiumcarbonat, Calciumcarbonat, Calciumoxid, Titannitrid, Magnesiumnitrid, Calciumphosphat, Calciumborat, Magnesiumborat oder deren Mischungen.

In einer alternativen Ausführungsform können als Komponente D) aber auch - sofern es der Bedarf erfordert - zinkhaltige Verbindungen eingesetzt werden. Hierzu zählen bevorzugt Zinkoxid, Zinkborat, Zinkstannat, Zinkhydroxystannat, Zinksulfid und Zinknitrid, oder deren Mischungen.

Bevorzugte phosphorhaltige Flammschutzmittel sind organische Metallphosphinate, Aluminiumsalze der Phosphonsäure, roter Phosphor, anorganische Metallhypophosphite, Metallphosphonate, Derivate der 9,10-Dihydro-9-oxa-10-phosphaphenanthren-10-oxide (DOPO-Derivate), Resorcinol-bis-(diphenylphosphat) (RDP) einschließlich Oligomere, Bisphenol-A-bis-diphenylphosphat (BDP) einschließlich Oligomere, Melaminpyrophosphat, Melaminpolyphosphat, Melamin-poly(aluminiumphosphat), Melamin-poly(zinkphosphat) oder Phenoxyphosphazenoligomere und deren Mischungen.

Ein bevorzugtes organisches Metallphosphinat ist Aluminium-tris(diethylphosphinat). Ein bevorzugtes anorganisches Metallhypophosphit ist Aluminiumhypophosphit.

Weitere als Komponente D) einzusetzende Flammschutzmittel sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die als Komponente D) einzusetzenden Flammschutzmittel können in Reinform, sowie über Masterbatche oder Kompaktate der Komponente A) zugesetzt werden.

In einer alternativen Ausführungsform können als Flammschutzmittel aber auch - sofern der Bedarf es erfordert unter Berücksichtigung der Nachteile durch den Verlust der Halogenfreiheit der Flammschutzmittel - halogenhaltige Flammschutzmittel eingesetzt werden. Bevorzugte halogenhaltige Flammschutzmittel sind handelsübliche organische Halogenverbindungen, besonders bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether, die alleine oder in Kombination mit Synergisten eingesetzt werden können, wobei unter den halogenhaltigen Flammschutzmitteln bromiertes Polystyrol besonders bevorzugt ist. Bromiertes Polystyrol wird dabei bevorzugt zu 10 - 30 Gew.-%, besonders bevorzugt zu 15 - 25 Gew.%

eingesetzt, jeweils bezogen auf die Gesamtzusammensetzung, wobei wenigstens eine der übrigen Komponenten soweit reduziert wird, dass die Summe aller Gewichtsprozente stets 100 ergibt.

In einer weiteren alternativen Ausführungsform können als Flammschutzmittelsynergisten aber auch - sofern der Bedarf es erfordert und unter Berücksichtigung der anfangs beschriebenen Nachteile hinsichtlich der Gefahrenklassifizierung H351 auch Antimontrioxid und Antimonpentoxid eingesetzt werden.

Bromiertes Polystyrol ist in diversen Produktqualitäten kommerziell verfügbar. Beispiele hierfür sind z.B. Firemaster® PBS64 der Fa. Lanxess, Köln, Deutschland sowie Saytex® HP-3010 der Fa. Albemarle, Baton Rouge, USA.

Unter den als Komponente D) einzusetzenden Flammschutzmitteln sind Aluminium-tris(diethylphosphinat)] [CAS Nr. 225789-38-8] sowie die Kombination aus Aluminium-tris(diethylphosphinat) und Melaminpolyphosphat oder die Kombination aus Aluminium-tris(diethylphosphinat) und mindestens einem Aluminiumsalz der Phosphonsäure ganz besonders bevorzugt, wobei letztere Kombination insbesondere bevorzugt ist.

Im Falle der Kombinationen aus Aluminium-tris(diethylphosphinat) und Melaminpolyphosphat bzw. aus Aluminium-tris(diethylphosphinat) und mindestens einem Aluminiumsalz der Phosphonsäure liegt der Anteil an Aluminium-tris(diethylphosphinat) bevorzugt im Bereich von 40 bis 90 Gewichtsteilen, besonders bevorzugt im Bereich von 50 bis 80 Gewichtsteilen, ganz besonders bevorzugt im Bereich von 60 bis 70 Gewichtsteilen, jeweils bezogen auf 100 Gewichtsteile der Kombination aus Aluminium-tris(diethylphosphinat) und Melaminpolyphosphat bzw. der Kombination aus Aluminium-tris(diethylphosphinat) und mindestens einem Aluminiumsalz der Phosphonsäure.

Als Komponente D) einzusetzendes Aluminium-tris(diethylphosphinat) ist dem Fachmann als Exolit® OP1230 oder Exolit® OP1240 der Fa. Clariant International Ltd. Muttenz, Schweiz, bekannt. Melaminpolyphosphat ist in diversen Produktqualitäten kommerziell verfügbar. Beispiele hierfür sind z.B. Melapur® 200/70 der Fa. BASF, Ludwigshafen, Deutschland sowie Budit® 3141 der Fa. Budenheim, Budenheim, Deutschland.

Bevorzugte Aluminiumsalze der Phosphonsäure sind ausgewählt aus der Gruppe

primäres Aluminiumphosphonat $[Al(H_2PO_3)_3]$,

basisches Aluminiumphosphonat $[Al(OH)H_2PO_3)_2 \cdot 2H_2O]$,

$Al_2(HPO_3)_3 \cdot x\ Al_2O_3 \cdot nH_2O$ mit x im Bereich von 2,27 bis 1 und n im Bereich von 0 bis 4,

$Al_2(HPO_3)_3 \cdot (H_2O)_q$ der Formel (VI) mit q im Bereich von 0 bis 4, insbesondere Aluminiumphosphonattetrahydrat $[Al_2(HPO_3)_3 \cdot 4H_2O]$ oder sekundäres Aluminiumphosphonat $[Al_2(HPO_3)_3]$,

$Al_2M_z(HPO_3)_y(OH)_v \cdot (H_2O)_w$ der Formel (VII) worin M Alkalimetallion(en) bedeutet und z im Bereich von 0,01 bis 1,5, y im Bereich von 2,63 - 3,5, v im Bereich von 0 bis 2 und w im Bereich von 0 bis 4 liegt, und

$Al_2(HPO_3)_u(H_2PO_3)t \cdot (H_2O)_s$ der Formel (VIII), worin u im Bereich von 2 bis 2,99, t im Bereich von 2 bis 0,01 und s im Bereich von 0 bis 4 liegt,

wobei in Formel (VII) z, y und v sowie in Formel VIII) u und t nur solche Zahlen annehmen können, dass das entsprechende Aluminiumsalz der Phosphonsäure als Ganzes ungeladen ist.

Bevorzugte Alkalimetalle M in Formel (VII) sind Natrium und Kalium.

Die beschriebenen Aluminiumsalze der Phosphonsäure können dabei einzeln oder im Gemisch eingesetzt werden.

Besonders bevorzugte Aluminiumsalze der Phosphonsäure werden ausgewählt aus der Gruppe

primäres Aluminiumphosphonat $[Al(H_2PO_3)_3]$,

sekundäres Aluminiumphosphonat $[Al_2(HPO_3)_3]$,

basisches Aluminiumphosphonat $[Al(OH)H_2PO_3)_2 \cdot 2H_2O]$,

Aluminiumphosphonattetrahydrat $[Al_2(HPO_3)_3 \cdot 4H_2O]$ und

$Al_2(HPO_3)_3 \cdot x\ Al_2O_3 \cdot nH_2O$ mit x im Bereich von 2,27 bis 1 und n im Bereich von 0 bis 4.

Ganz besonders bevorzugt sind sekundäres Aluminiumphosphonat $Al_2(HPO_3)_3$ [CAS Nr. 71449-76-8] und sekundäres Aluminiumphosphonattetrahydrat $Al_2(HPO_3)_3 \cdot 4H_2O$ [CAS Nr. 156024-71-4], insbesondere bevorzugt ist sekundäres Aluminiumphosphonat $Al_2(HPO_3)_3$.

Die Herstellung erfindungsgemäß als Komponente D) einzusetzender Aluminiumsalze der Phosphonsäure ist zum Beispiel in WO 2013/083247 A1 beschrieben. Sie erfolgt üblicherweise durch Umsetzung einer Aluminiumquelle, bevorzugt Aluminiumisopropoxid, Aluminiumnitrat, Aluminiumchorid oder Aluminiumhydroxid, mit einer Phosphorquelle, bevorzugt Phosphonsäure, Ammoniumphosphonat, Alkaliphosphonat, und wahlweise mit einem Templat in einem Lösungsmittel bei 20 bis 200°C während einer Zeitspanne von bis zu 4 Tagen. Aluminiumquelle und Phosphorquelle werden dazu vermischt, unter hydrothermalen Bedingungen oder unter Rückfluss erhitzt, abfiltriert gewaschen und getrocknet. Bevorzugte Template dabei sind 1,6 Hexandiamin, Guanidincarbonat oder Ammoniak. Bevorzugtes Lösungsmittel ist Wasser.

**Komponente E)**

Als Komponente E) wird wenigstens ein weiteres, von den Komponenten B) bis D) unterschiedliches **Additiv** eingesetzt. Bevorzugte als Komponente E) einzusetzende Additive sind Antioxidantien, Thermostabilisatoren, UV-Stabilisatoren, Gammastrahlenstabilisatoren, Komponenten zur Verringerung der Wasseraufnahme bzw. Hydrolysestabilisatoren, Antistatika, Emulgatoren, Nukleierungsmittel, Weichmacher, Verarbeitungshilfsmittel, Schlagzähmodifikatoren, Gleit- und/oder Entformungsmittel, Komponenten zur Verringerung der Wasseraufnahme, Fließhilfsmittel oder Elastomermodifikatoren. kettenverlängernd wirkende Additive, von Komponenten B) verschiedene Farbmittel, und soweit es der Bedarf erfordert, weitere Laserabsorber. Die Additive können alleine oder in Mischung bzw. in Form von Masterbatchen eingesetzt werden.

Bevorzugte **Thermostabilisatoren** der Komponente E) sind sterisch gehinderte Phenole, insbesondere solche enthaltend mindestens eine 2,6-Di-tert.-butylphenyl-Gruppe und/oder 2-tert.-Butyl-6-methylphenyl-Gruppe, ferner Phosphite, Hypophosphite, insbesondere Natriumhypophosphit $NaH_2PO_2$, Hydrochinone, aromatische sekundäre Amine, substituierte Resorcine, Salicylate, Benzotriazole und Benzophenone, 3,3'-Thiodipropionsäureester sowie verschieden substituierte Vertreter dieser Gruppen oder deren Mischungen.

In einer Ausführungsform können als Thermostabilisatoren der Komponente E) auch Kupfersalze, vorzugsweise in Kombination mit Natriumhypophosphit $NaH_2PO_2$ eingesetzt werden. Bevorzugt wird als Kupfersalz Kupfer(I) iodid [CAS Nr. 7681-65-4] und/oder Kupfer(triphenylphosphino)iodid [CAS Nr. 47107-74-4] eingesetzt. Vorzugsweise werden die Kupfersalze in Kombination mit Natriumhypophosphit $NaH_2PO_2$ oder mit wenigstens einem Alkaliiodid eingesetzt. Bevorzugtes Alkaliiodid ist Kaliumiodid [CAS Nr. 7681-11-0].

Als Komponente E) einzusetzende Thermostabilisatoren werden vorzugsweise zu 0,01 bis 2 Massenanteilen, besonders bevorzugt zu 0,05 bis 1 Massenanteilen, jeweils bezogen auf 100 Massenanteile der Komponente A) eingesetzt.

Als Komponente E) einzusetzende **UV-Stabilisatoren** werden vorzugsweise substituierte Resorcine, Salicylate, Benzotriazole und Benzophenone, HALS-Derivate ("Hindered Amine Light Stabilizers") enthaltend mindestens eine 2,2,6,6-Tetramethyl-4-piperidyl-Einheit oder Benzophenone eingesetzt.

Als Komponente E) einzusetzende UV-Stabilisatoren werden vorzugsweise zu 0,01 bis 2 Massenanteilen, besonders bevorzugt zu 0,1 bis 1 Massenanteilen, jeweils bezogen auf 100 Massenanteile der Komponente A) eingesetzt.

Als Komponente E) einzusetzende und von Komponente B) verschiedene **Farbmittel** werden in einer Ausführungsform bevorzugt anorganische Pigmente eingesetzt, besonders bevorzugt Ultramarinblau, Bismutvanadat [CAS Nr. 14059-33-7], Eisenoxid [CAS Nr. 1309-37-1], Titandioxid [CAS Nr. 13463-67-7 (Rutil) oder CAS Nr. 1317-70-0 (Anatas)], Bariumsulfat [CAS Nr. 7727-43-7], Zinksulfid [CAS Nr. 1314-98-3] oder Sulfide enthaltend Cer. Bevorzugte Sulfide enthaltend Cer sind Cer(III)sulfid ($Ce_2S_3$) [CAS-Nr. 12014-93-6], auch bekannt als C.I.Pigment Orange 75, oder Cer(III) sulfid / Lanthan(III)sulfid ($Ce_2S_3$ / $La_2S_3$) [CAS-Nr. 12014-93-6 ; CAS-Nr. 12031-49-1] auch bekannt als C.I. Pigment Orange 78. Insbesondere bevorzugt ist Bariumsulfat.

Als Komponente E) einzusetzende und von Komponente B) verschiedene **Farbmittel** werden in einer Ausführungsform bevorzugt organische Farbmittel eingesetzt, besonders bevorzugt Phthalocyanine, Chinacridone, Benzimidazole, insbesondere Ni-2-hydroxy-napthyl-benzimidazol [CAS Nr. 42844-93-9] und/oder Pyrimidin-azo-benzimidazol [CAS-Nr. 72102-84-2] und/oder Pigment Yellow 192 [CAS Nr. 56279-27-7], außerdem Perylene, Anthrachinone, insbesondere C.I. Solvent Yellow 163 [CAS Nr. 13676-91-0].

Die Aufzählung als Komponente E) einzusetzender anorganischer oder organischer ist nicht abschließend.

In einer Ausführungsform kann, soweit es der Bedarf erfordert als Farbmittel auch Ruß oder Nigrosin eingesetzt werden.

In einer bevorzugten Ausführungsform wird für Komponente E) Titandioxid als Farbmittel Titanweiß, auch als Pigment White 6 oder CI 77891 bezeichnet, eingesetzt.

Als Komponente E) einzusetzende **Nukleierungsmittel** werden bevorzugt Natrium- oder Calciumphenylphosphinat, Aluminiumoxid oder Siliziumdioxid sowie ganz besonders bevorzugt Talkum eingesetzt, wobei diese Aufzählung nicht abschließend ist.

Als Komponente E) einzusetzende **Fließhilfsmittel** werden bevorzugt Copolymerisate aus mindestens einem $\alpha$-Olefin mit mindestens einem Methacrylsäurester oder Acrylsäureester eines aliphatischen Alkohols eingesetzt. Besonders bevorzugt sind dabei Copolymerisate, bei denen das $\alpha$-Olefin aus Ethen und/oder Propen aufgebaut ist und der Methacrylsäurester oder Acrylsäureester als Alkoholkomponente lineare oder verzweigte Alkylgruppen mit 6 bis 20C-Atomen enthält. Ganz besonders bevorzugt ist Acrylsäure-(2-ethyl)-hexylester. Als Fließhilfsmittel geeignete Copolymerisate zeichnen sich neben der Zusammensetzung auch durch das niedrige Molekulargewicht aus. Dementsprechend sind für die erfindungsgemäß vor thermischem Abbau zu bewahrenden Polymerzusammensetzungen vor allem Copolymerisate geeignet, die einen MFI-Wert gemessen bei 190°C und einer Belastung von 2,16 kg von mindestens 100 g / 10 min, bevorzugt von mindestens 150 g / 10 min, besonders bevorzugt von mindestens 300 g / 10 min aufweisen. Der MFI, Melt-Flow-Index, dient zur Charakterisierung des Flusses einer Schmelze eines Thermoplasten und unterliegt den Normen **ISO 1133** oder **ASTM D 1238.** Insbesondere bevorzugt wird als Fließhilfsmittel ein Copolymerisat aus Ethen und Acrylsäure-(2-ethyl)-hexylester mit MFI 550 eingesetzt, bekannt als Lotryl® 37EH550.

Als Komponente E) einzusetzende **kettenverlängernde Additive** werden bevorzugt di- oder mehrfunktionelle verzweigend oder kettenverlängernd wirkende Additive, enthaltend mindestens zwei verzweigend oder kettenverlängernd wirkende funktionelle Gruppen pro Molekül, eingesetzt. Als verzweigende bzw. kettenverlängende Additive werden niedermolekulare oder oligomere Verbindungen bevorzugt, die über mindestens zwei kettenverlängernd wirkende funktionelle Gruppen pro Molekül verfügen, welche mit primären und/oder sekundären Aminogruppen, und/oder Amidgruppen und/oder Carbonsäuregruppen reagieren können. Kettenverlängernd wirkende funktionelle Gruppen sind bevorzugt Isocyanate, Alkohole, blockierte Isocyanate, Epoxide, Maleinsäureanhydrid, Oxazoline, Oxazine, Oxazolone, wobei Epoxide bevorzugt sind.

Insbesondere bevorzugte di- oder mehrfunktionelle verzweigend oder kettenverlängernd wirkende Additive sind Diepoxide auf Basis Diglycidylether (Bisphenol und Epichlorhydrin), auf Basis von Aminepoxidharz (Anilin und Epichlorhydrin), auf Basis von Diglycidylester (cycloaliphatische Dicarbonsäuren und Epichlorhydrin) einzeln oder in Mischungen sowie 2,2-Bis[p-hydroxy-phenyl]-propan-diglycidylether, Bis-[p-(N-methyl-N-2,3-epoxy-propylamino)-phenyl]-methan sowie epoxidierte Fettsäureester des Glycerins, enthaltend mindestens zwei Epoxidgruppen pro Molekül.

Besonders bevorzugte di- oder mehrfunktionelle verzweigend oder kettenverlängernd wirkende Additive sind Glycidylether, ganz besonders bevorzugt Bisphenol A-Diglycidylether [CAS Nr. 98460-24-3] oder epoxidierte Fettsäureester des Glycerins, sowie auch ganz besonders bevorzugt epoxidiertes Sojaöl [CAS Nr. 8013-07-8] und/oder epoxidiertes Leinöl.

Bevorzugt als Komponente E) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Bevorzugt als Komponente E) einzusetzende **Elastomermodifikatoren** umfassen u.a. ein oder mehrere Pfropfpolymerisate von

E.1 5 bis 95 Gew.-%, vorzugsweise 30 bis 90 Gew.-%, wenigstens eines Vinylmonomeren und

E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C, wobei die Gewichtsprozente sich auf 100 Gew.-% Elastomermodifikator beziehen.

Die Pfropfgrundlage E.2 hat im allgemeinen eine mittels Laserdiffraktometrie gemäß **ISO 13320** zu bestimmende mittlere Teilchengröße d50-Wert im Bereich von 0,05 bis 10 $\mu$m, vorzugsweise im Bereich von 0,1 bis 5 $\mu$m, besonders bevorzugt im Bereich von 0,2 bis 1 $\mu$m.

Monomere zu E.1 sind vorzugsweise Gemische aus

E.1.1 50 bis 99 Gew.-% Vinylaromaten und/oder kernsubstituierten Vinylaromaten, insbesondere Styrol, $\alpha$-Methylstyrol, p-Methylstyrol, p-Chlorstyrol, und/oder Methacrylsäure-($C_1$-$C_8$)-Alkylester, insbesondere. Methylmethacrylat, Ethylmethacrylat) und

E.1.2 1 bis 50 Gew.-% Vinylcyanide, insbesondere ungesättigte Nitrile wie Acrylnitril und Methacrylnitril, und/oder (Meth)Acrylsäure-($C_1$-$C_8$)-alkylester, insbesondere Methylmethacrylat, Glycidylmethacrylat, n-Butylacrylat, t-Butylacrylat, und/oder Derivate 'insbesondere Anhydride und Imide ungesättigter Carbonsäuren, insbesondere Maleinsäureanhydrid oder N-Phenyl-Maleinimid, wobei die Gewichtsprozente sich auf 100 Gew.-% Elastomermodifikator beziehen.

Bevorzugte Monomere E.1.1 sind auszuwählen aus mindestens einem der Monomere Styrol, $\alpha$-Methylstyrol und Methylmethacrylat, bevorzugte Monomere E.1.2 sind ausgewählt aus mindestens einem der Monomere Acrylnitril, Maleinsäureanhydrid, Glycidylmethacrylat und Methylmethacrylat. Besonders bevorzugte Monomere sind E.1.1 Styrol und E.1.2 Acrylnitril.

Für die in den Elastomermodifikatoren einzusetzenden Pfropfpolymerisate geeignete Pfropfgrundlagen E.2 sind beispielsweise Dienkautschuke, EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. EPDM steht für Ethylen-Propylen-Dien-Kautschuk.

Bevorzugte Pfropfgrundlagen E.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß E.1.1 und E.1.2, mit der Maßgabe, dass die Glasübergangstemperatur der Komponente E.2 bei <10°C, vorzugsweise bei <0°C, besonders bevorzugt bei <-10°C liegt.

Besonders bevorzugte Propfgrundlagen E.2 sind ABS-Polymerisate (Emulsions-, Masse- und Suspensions-ABS) wobei ABS für Acrylnitril-Butadien-Styrol steht, wie sie z. B. in der DE-A 2 035 390 oder in der DE-A 2 248 242 bzw. in Ullmann, Enzyklopädie der Technischen Chemie, Bd. 19 (1980), S. 277 - 295 beschrieben sind. Der Gelanteil der Pfropfgrundlage E.2 beträgt bevorzugt mindestens 30 Gew.-%, besonders bevorzugt mindestens 40 Gew.-% (in Toluol gemessen).

Die als Komponente E) einzusetzenden Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.

Ebenfalls geeignete Acrylatkautschuke basieren auf Pfropfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren. Zu den bevorzugten polymerisierbaren Acrylsäureestern gehören $C_1$-$C_8$-Alkylester, vorzugsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat, Glycidylester sowie Mischungen dieser Monomeren. Dabei sind Propfpolymerisate mit Butylacrylat als Kern und Methylmethacrylaten als Schale, insbesondere Paraloid® EXL2300, Fa. Dow Corning Corporation, Midland, Michigan, USA, besonders bevorzugt.

Zur Vernetzung können alternativ zu den ethylenisch ungesättigten Monomeren Monomere mit mehr als einer polymerisierbaren Doppelbindung copolymerisiert werden. Bevorzugte vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Besonders bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Ganz besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind Acrylnitril, Styrol, $\alpha$-Methylstyrol, Acrylamide, Vinyl-$C_1$-$C_6$-alkylether, Methylmethacrylat, Glycidylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere bevorzugt geeignete Pfropfgrundlagen gemäß E.2 sind Silikonkautschuke mit pfropfaktiven Stellen, wie sie in den DE-A 3 704 657, DE-A 3 704 655, DE-A 3 631 540 und DE-A 3 631 539 beschrieben werden.

Bevorzugte Propfpolymerisate mit einem Silikonanteil sind solche, die Methylmethacrylat oder Styrol-Acrylnitril als Schale und ein Silikon/Acrylat-Propf als Kern aufweisen. Bevorzugt als Schale einzusetzendes Styrol-Acrylnitril ist Metablen® SRK200. Bevorzugt als Schale einzusetzendes Methylmethacrylat ist Metablen® S2001 oder Metablen®

S2030 oder Metablen® SX-005. Besonders bevorzugt wird Metablen® S2001 eingesetzt. Die Produkte mit dem Handelsnamen Metablen® sind erhältlich bei Mitsubishi Rayon Co., Ltd., Tokio, Japan.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind Acrylnitril, Styrol, $\alpha$-Methylstyrol, Acrylamide, Vinyl-$C_1$-$C_6$-alkylether, Methylmethacrylat, Glycidylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10 °C, vorzugsweise < 0 °C, besonders bevorzugt < -20 °C aufweisen. Bevorzugt gehören hierzu Elastomere mit einer Blockcopolymerstruktur sowie weiterhin thermoplastisch aufschmelzbare Elastomere, insbesondere EPM-, EPDM- und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

Als Komponente E) einzusetzende **Gleit- und/oder Entformungsmittel** sind bevorzugt langkettige Fettsäuren, insbesondere Stearinsäure oder Behensäure, deren Salze, insbesondere Ca- oder Zn-Stearat, sowie deren Esterderivate, insbeonsere solche auf Basis von Pentaerythritol, insbesondere Fettsäureester des Pentaerythritols oder Amidderivate, insbesondere Ethylen-bis-stearylamid, Montanwachse sowie niedermolekulare Polyethylen- bzw. Polypropylenwachse.

Montanwachse im Sinne der vorliegenden Erfindung sind Mischungen aus geradkettigen, gesättigten Carbonsäuren mit Kettenlängen im Bereich von 28 bis 32 C-Atomen.

Erfindungsgemäß werden besonders bevorzugt Gleit- und/oder Entformungsmittel aus der Gruppe der Ester gesättigter oder ungesättigter aliphatischer Carbonsäuren mit 8 bis 40 C-Atomen mit aliphatischen gesättigten Alkoholen oder Amide von Aminen mit 2 bis 40 C-Atomen mit ungesättigten aliphatischen Carbonsäuren mit 8 bis 40 C-Atomen bzw. statt jeweils der Carbonsäuren Metallsalze gesättigter oder ungesättigter aliphatischer Carbonsäuren mit 8 bis 40 C-Atomen eingesetzt.

Ganz besonders bevorzugt als Komponente E) einzusetzende Gleit- und/oder Entformungsmittel sind auszuwählen aus der Gruppe Pentaerythritoltetrastearat [CAS Nr. 115-83-3], Ethylen-bis-stearylamid, Calciumstearat und Ethylenglycoldimontanat. Insbesondere bevorzugt wird Calciumstearat [CAS Nr. 1592-23-0] oder Ethylen-bis-stearylamid [CAS Nr. 110-30-5] eingesetzt. Insbesondere besonders bevorzugt wird Ethylen-bis-stearylamid (Loxiol® EBS von Emery Oleochemicals) eingesetzt.

Als Komponente E) bevorzugt einzusetzende **Hydrolysestabilisatoren bzw. Komponenten zur Verringerung der Wasseraufnahme** sind bevorzugt Polyester, wobei Polybutylenterepthalat und/oder Polyethylenterephthalat bevorzugt sind und Polyethylenterephthalat ganz besonders bevorzugt ist. Die Polyester werden dabei bevorzugt in Konzentrationen von 5 bis 20 Gew.-% und besonders bevorzugt in Konzentrationen von 7 bis 15 Gew-% eingesetzt, jeweils bezogen auf die gesamte Polymerzusammensetzung und mit der Maßgabe, dass die Summe aller Gewichtsprozente der Polymerzusammensetzung stets 100 Gew.-% ergibt.

Als Komponente E) bevorzugt einzusetzende **Laserabsorber** werden ausgewählt aus der Gruppe Zinnoxid, Zinnorthophosphat, Bariumtitanat, Aluminiumoxid, Kupferhydroxyphosphat, Kupferorthophosphat, Kaliumkupferdiphosphat, Kupferhydroxid, Bismuttrioxid und Antrachinon. Besonders bevorzugt ist Zinnoxid.

In einer alternativen Ausführungsform kann als Laserabsorber aber auch - sofern der Bedarf es erfordert unter Berücksichtigung der anfangs beschriebenen Nachteile hinsichtlich der Gefahrenklassifizierung H351 auch Antimonzinnoxid, Antimontrioxid oder Antimonpentoxid eingesetzt werden.

Der Laserabsorber kann direkt als Pulver oder in Form von Masterbatchen eingesetzt werden. Bevorzugte Masterbatche sind solche auf Basis von Polyester und/oder Polyolefinen, bevorzugt Polyethylen. Ganz besonders bevorzugt wird der Laserabsorber in Form eines Polyalkylenterephthalat-basierten Masterbatches eingesetzt.

Der Laserabsorber kann einzeln oder als Gemisch mehrerer Laserabsorber eingesetzt werden.

Laserabsorber können Laserlicht einer bestimmten Wellenlänge absorbieren. In der Praxis liegt diese Wellenlänge im Bereich von 157 nm bis 10,6 μm. Beispiele für Laser dieser Wellenlängen sind in WO2009/003976 A1 beschrieben. Bevorzugt werden Nd:YAG Laser, mit denen Wellenlängen von 1064, 532, 355 und 266 nm realisiert werden können, und $CO_2$-Laser eingesetzt.

**Besonders bevorzugte Ausführungsformen**

Erfindungsgemäß bevorzugt sind **Hochvoltkomponenten,** insbesondere Hochvoltkomponenten für die Elektromobilität, basierend auf Polymerzusammensetzungen enthaltend

A) auf 100 Massenanteile wenigstens eines Polyesters, vorzugsweise $C_2$-$C_{10}$-Polyalkylenterephthalat, insbesondere Polybutylenterephthalat (PBT), oder Polycarbonat,

B) 0,01 bis 5 Massenanteile wenigstens eines Pigmentsystems auf Basis anorganischer Mischoxide enthaltend Titandioxid, Zinnoxid und Zinkoxid, und

C) 1 bis 150 Massenanteile wenigstens eines Füllstoffs oder Verstärkungsstoffs auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,
mit der Maßgabe eines $\Delta E < 30$ zu den L*a*b* Koordinaten einer mit "2" beginnenden Farbnummer der RAL-Farbtabelle.

Erfindungsgemäß bevorzugt sind **Hochvoltkomponenten,** insbesondere Hochvoltkomponenten für die Elektromobilität, basierend auf Polymerzusammensetzungen enthaltend

A) auf 100 Massenanteile wenigstens eines Polyesters, vorzugsweise $C_2$-$C_{10}$-Polyalkylenterephthalat, insbesondere Polybutylenterephthalat (PBT), oder Polycarbonat,

B) 0,01 bis 5 Massenanteile wenigstens eines Pigmentsystems auf Basis anorganischer Mischoxide enthaltend Titandioxid, Zinnoxid und Zinkoxid, und

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln,
mit der Maßgabe eines $\Delta E < 30$ zu den L*a*b* Koordinaten einer mit "2" beginnenden Farbnummer der RAL-Farbtabelle.

Erfindungsgemäß bevorzugt sind **Hochvoltkomponenten,** insbesondere Hochvoltkomponenten für die Elektromobilität, basierend auf Polymerzusammensetzungen enthaltend

A) auf 100 Massenanteile wenigstens eines Polyesters, vorzugsweise **$C_2$-$C_{10}$-Polyalkylenterephthalat,** insbesondere Polybutylenterephthalat (PBT), oder Polycarbonat,

B) 0,01 bis 5 Massenanteile wenigstens eines Pigmentsystems auf Basis anorganischer Mischoxide enthaltend Titandioxid, Zinnoxid und Zinkoxid, und

E') 0,01 bis 2 Massenanteile wenigstens Titandioxid,
mit der Maßgabe eines $\Delta E < 30$ zu den L*a*b* Koordinaten einer mit "2" beginnenden Farbnummer der RAL-Farbtabelle.

Erfindungsgemäß bevorzugt sind **Hochvoltkomponenten,** insbesondere Hochvoltkomponenten für die Elektromobilität, basierend auf Polymerzusammensetzungen enthaltend

A) auf 100 Massenanteile wenigstens eines Polyesters, vorzugsweise $C_2$-$C_{10}$-Polyalkylenterephthalat, insbesondere Polybutylenterephthalat (PBT), oder Polycarbonat,

B) 0,01 bis 5 Massenanteile wenigstens eines Pigmentsystems auf Basis anorganischer Mischoxide enthaltend Titandioxid, Zinnoxid und Zinkoxid, und

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester,
mit der Maßgabe eines ΔE <30 zu den L*a*b* Koordinaten einer mit "2" beginnenden Farbnummer der RAL-Farbtabelle.

Erfindungsgemäß bevorzugt sind **Hochvoltkomponenten,** insbesondere Hochvoltkomponenten für die Elektromobilität, basierend auf Polymerzusammensetzungen enthaltend

A) auf 100 Massenanteile wenigstens eines Polyesters, vorzugsweise $C_2$-$C_{10}$-Polyalkylenterephthalat, insbesondere Polybutylenterephthalat (PBT), oder Polycarbonat,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füllstoffstoffs oder Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester,
mit der Maßgabe eines ΔE <30 zu den L*a*b* Koordinaten einer mit "2" beginnenden Farbnummer der RAL-Farbtabelle.

Erfindungsgemäß bevorzugt sind **Hochvoltkomponenten,** insbesondere Hochvoltkomponenten für die Elektromobilität, basierend auf Polymerzusammensetzungen enthaltend

A) auf 100 Massenanteile wenigstens eines Polyesters, vorzugsweise $C_2$-$C_{10}$-Polyalkylenterephthalat, insbesondere Polybutylenterephthalat (PBT), oder Polycarbonat,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füllstoffstoffs oder Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und

E') 0,01 bis 2 Massenanteile wenigstens Titandioxid,
mit der Maßgabe eines ΔE <30 zu den L*a*b* Koordinaten einer mit "2" beginnenden Farbnummer der RAL-Farbtabelle.

Erfindungsgemäß bevorzugt sind **Hochvoltkomponenten,** insbesondere Hochvoltkomponenten für die Elektromobilität, basierend auf Polymerzusammensetzungen enthaltend

A) auf 100 Massenanteile wenigstens eines Polyesters, vorzugsweise $C_2$-$C_{10}$-Polyalkylenterephthalat, insbesondere Polybutylenterephthalat (PBT), oder Polycarbonat,

B) 0,01 bis 5 Massenanteile wenigstens eines Pigmentsystems auf Basis anorganischer Mischoxide enthaltend Titandioxid, Zinnoxid und Zinkoxid,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und

E') 0,01 bis 2 Massenanteile wenigstens Titandioxid,
mit der Maßgabe eines ΔE <30 zu den L*a*b* Koordinaten einer mit "2" beginnenden Farbnummer der RAL-Farbtabelle.

Erfindungsgemäß bevorzugt sind **Hochvoltkomponenten,** insbesondere Hochvoltkomponenten für die Elektromobilität, basierend auf Polymerzusammensetzungen enthaltend

A) auf 100 Massenanteile wenigstens eines Polyesters, vorzugsweise $C_2$-$C_{10}$-Polyalkylenterephthalat, insbesondere Polybutylenterephthalat (PBT), oder Polycarbonat,

B) 0,01 bis 5 Massenanteile wenigstens eines Pigmentsystems auf Basis anorganischer Mischoxide enthaltend Titandioxid, Zinnoxid und Zinkoxid,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester,
mit der Maßgabe eines ΔE <30 zu den L*a*b* Koordinaten einer mit "2" beginnenden Farbnummer der RAL-Farbtabelle.

Erfindungsgemäß bevorzugt sind **Hochvoltkomponenten,** insbesondere Hochvoltkomponenten für die Elektromobilität, basierend auf Polymerzusammensetzungen enthaltend

A) auf 100 Massenanteile wenigstens eines Polyesters, vorzugsweise $C_2$-$C_{10}$-Polyalkylenterephthalats, insbesondere Polybutylenterephthalat, oder Polycarbonat,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füllstoffstoffs oder Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und

E') 0,01 bis 2 Massenanteile wenigstens Titandioxid,
mit der Maßgabe eines ΔE <30 zu den L*a*b* Koordinaten einer mit "2" beginnenden Farbnummer der RAL-Farbtabelle.

Erfindungsgemäß bevorzugt sind **Hochvoltkomponenten,** insbesondere Hochvoltkomponenten für die Elektromobilität, basierend auf Polymerzusammensetzungen enthaltend

A) auf 100 Massenanteile wenigstens eines Polyesters, vorzugsweise $C_2$-$C_{10}$-Polyalkylenterephthalats, insbesondere Polybutylenterephthalat, oder Polycarbonat,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester,
mit der Maßgabe eines $\Delta E < 30$ zu den L*a*b* Koordinaten einer mit "2" beginnenden Farbnummer der RAL-Farbtabelle.

Erfindungsgemäß bevorzugt sind **Hochvoltkomponenten,** insbesondere Hochvoltkomponenten für die Elektromobilität, basierend auf Polymerzusammensetzungen enthaltend

A) auf 100 Massenanteile wenigstens eines Polyesters, vorzugsweise $C_2$-$C_{10}$-Polyalkylenterephthalats, insbesondere Polybutylenterephthalat, oder Polycarbonat,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln,

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester, und

E') 0,01 bis 2 Massenanteile wenigstens Titandioxid,
mit der Maßgabe eines $\Delta E < 30$ zu den L*a*b* Koordinaten einer mit "2" beginnenden Farbnummer der RAL-Farbtabelle.

Zur Klarstellung sei angemerkt, dass vom Rahmen der vorliegenden Erfindung alle zu den Komponenten A) bis E) aufgeführten allgemeinen oder in Vorzugsbereichen genannten Definitionen, Mengenangaben und Parameter in beliebigen Kombinationen von den erfindungsgemäßen Hochvoltkomponenten bzw. Hochvoltkomponenten für die Elektromobilität umfasst sind.

**Verfahren**

Die vorliegende Erfindung betrifft zudem ein **Verfahren** zur Herstellung von Hochvoltkomponenten, insbesondere von Hochvoltkomponenten für die Elektromobilität, worin man

A) auf 100 Massenanteile wenigstens eines Polyesters, vorzugsweise eines Polycarbonats oder $C_2$-$C_{10}$-Polyalkylenterephthalats, insbesondere Polybutylenterephthalat,

B) 0,01 bis 5 Massenanteile wenigstens eines Pigmentsystems auf Basis anorganischer Mischoxide enthaltend Titandioxid, Zinnoxid und Zinkoxid zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines $\Delta E < 30$ zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyesters, vorzugsweise eines Polycarbonats oder $C_2$-$C_{10}$-Polyalkylenterephthalats, insbesondere Polybutylenterephthalat,

B) 0,01 bis 5 Massenanteile wenigstens eines Pigmentsystems auf Basis anorganischer Mischoxide enthaltend Titandioxid, Zinnoxid und Zinkoxid, und

C) 1 bis 150 Massenanteile wenigstens eines Füllstoffs oder Verstärkungsstoffs auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,
zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines $\Delta E < 30$ zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyesters, vorzugsweise eines Polycarbonats oder $C_2$-$C_{10}$-Polyalkylenterephthalats, insbesondere Polybutylenterephthalat,

B) 0,01 bis 5 Massenanteile wenigstens eines Pigmentsystems auf Basis anorganischer Mischoxide enthaltend Titandioxid, Zinnoxid und Zinkoxid, und

E') 0,01 bis 2 Massenanteile wenigstens Titandioxid,
zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines $\Delta E < 30$ zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyesters, vorzugsweise eines Polycarbonats oder $C_2$-$C_{10}$-Polyalkylenterephthalats, insbesondere Polybutylenterephthalat,

B) 0,01 bis 5 Massenanteile wenigstens eines Pigmentsystems auf Basis anorganischer Mischoxide enthaltend Titandioxid, Zinnoxid und Zinkoxid, und

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln,
zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines ΔE <30 zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyesters, vorzugsweise eines Polycarbonats oder $C_2$-$C_{10}$-Polyalkylenterephthalats, insbesondere Polybutylenterephthalat,

B) 0,01 bis 5 Massenanteile wenigstens eines Pigmentsystems auf Basis anorganischer Mischoxide enthaltend Titandioxid, Zinnoxid und Zinkoxid, und

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester,
zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines ΔE <30 zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyesters, vorzugsweise eines Polycarbonats oder $C_2$-$C_{10}$-Polyalkylenterephthalats, insbesondere Polybutylenterephthalat,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füllstoffstoffs oder Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln,
zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines ΔE <30 zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyesters, vorzugsweise eines Polycarbonats oder $C_2$-$C_{10}$-Polyalkylenterephthalats, insbesondere Polybutylenterephthalat,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füllstoffstoffs oder Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und

E') 0,01 bis 2 Massenanteile wenigstens Titandioxid,
zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines $\Delta E < 30$ zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyesters, vorzugsweise eines Polycarbonats oder $C_2$-$C_{10}$-Polyalkylenterephthalats, insbesondere Polybutylenterephthalat,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester,
zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines $\Delta E < 30$ zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyesters, vorzugsweise eines Polycarbonats oder $C_2$-$C_{10}$-Polyalkylenterephthalats, insbesondere Polybutylenterephthalat,

B) 0,01 bis 5 Massenanteile wenigstens eines Pigmentsystems auf Basis anorganischer Mischoxide enthaltend Titandioxid, Zinnoxid und Zinkoxid,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln,

und

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester,
zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines $\Delta E$ <30 zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyesters, vorzugsweise eines Polycarbonats oder $C_2$-$C_{10}$-Polyalkylenterephthalats, insbesondere Polybutylenterephthalat,

B) 0,01 bis 5 Massenanteile wenigstens eines Pigmentsystems auf Basis anorganischer Mischoxide enthaltend Titandioxid, Zinnoxid und Zinkoxid,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und

E') 0,01 bis 2 Massenanteile wenigstens Titandioxid,
zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines $\Delta E$ <30 zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyesters, vorzugsweise eines Polycarbonats oder $C_2$-$C_{10}$-Polyalkylenterephthalats, insbesondere Polybutylenterephthalat,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester,
zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren

Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines ΔE <30 zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyesters, vorzugsweise eines Polycarbonats oder $C_2$-$C_{10}$-Polyalkylenterephthalats, insbesondere Polybutylenterephthalat,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und

E') 0,01 bis 2 Massenanteile wenigstens Titandioxid,
zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines ΔE <30 zu den L*a*b* Koordinaten einer mit "2" beginnenden Farbnummer der RAL-Farbtabelle.

Vorzugsweise betrifft die Erfindung ein Verfahren zur Herstellung von Hochvoltkomponenten, insbesondere von Hochvoltkomponenten für die Elektromobilität, worin man

A) auf 100 Massenanteile wenigstens eines Polyesters, vorzugsweise eines Polycarbonats oder $C_2$-$C_{10}$-Polyalkylenterephthalats, insbesondere Polybutylenterephthalat,

B) 0,01 bis 5 Massenanteile wenigstens eines Pigmentsystems auf Basis anorganischer Mischoxide enthaltend Titandioxid, Zinnoxid und Zinkoxid,

C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln,

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester, und

E') 0,01 bis 2 Massenanteile wenigstens Titandioxid,

zu Polymerzusammensetzungen mischt, zu Strängen austrägt, bis zur Granulierfähigkeit abkühlt, trocknet und granuliert

und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines ΔE <30 zu den L*a*b* Koordinaten einer mit "2" beginnenden Farbnummer der RAL-Farbtabelle.

Vorzugsweise schließt sich dem Verfahren ein Laserbeschriftungsschritt an, wobei die Hochvoltkomponenten, insbesondere die Hochvoltkomponenten für die Elektromobilität, mit einem Laser, vorzugsweise einem Festkörperlaser mit Nd:$YVO_4$- oder ND:YAG-Kristall mit einer Laserwellenlänge von 1064nm oder 532nm oder 355nm, besonders bevorzugt der Wellenlänge 355nm, beschriftet werden.

Besonders bevorzugt wird bei den erfindungsgemäßen Verfahren als Pigmentsystem Mischoxide enthaltend Titandioxid, Zinnoxid und Zinkoxid der CAS-Nr. 923954-49-8 eingesetzt. Erfindungsgemäß in den erfindungsgemäßen Verfahren insbesondere bevorzugt einzusetzende Pigmentsysteme sind C.I. Pigment Orange 82 [CAS-Nr. 2170864-77-2] oder C.I.Pigment Yellow 216 [CAS-Nr. 817181-98-9]. Bezüglich der C.I. Klassifizierung siehe die Beschreibung zu den Polymerzusammensetzungen hinsichtlich der Komponente B).

In bevorzugter Ausführungsform werden die Polymerzusammensetzungen vor dem Weiterverarbeiten zu Strängen ausgetragen, bis zur Granulierfähigkeit abgekühlt, gegebenenfalls getrocknet und granuliert. In einer Ausführungsform wird die Polymerzusammensetzung als Granulat zwischengelagert.

Bevorzugte Hochvoltkomponenten, insbesondere Hochvoltkomponenten für die Elektromobilität kommen im elektrischen Antriebsstrang und/oder im Batteriesystem zum Einsatz. Besonders bevorzugte Hochvoltkomponenten sind Abdeckungen für Elektrik oder Elektronik, Steuergeräte, Abdeckungen / Gehäuse für Sicherungen, Relais, Batteriezellenmodule, Sicherungshalter, Sicherungsstecker, Anschlussklemmen, Kabelhalterungen oder Ummantelungen, insbesondere Ummantelungen von Hochvoltstromschienen und Hochvoltstromverteilerschienen (engl. "bus bar").

Insbesondere bevorzugt sind laserbeschreibbare bzw. laserbeschriftete Hochvoltkomponenten basierend auf den oben beschriebenen Zusammensetzungen. Insbesondere ganz besonders bevorzugt sind laserbeschreibbare bzw. laserbeschriftete Hochvoltkomponenten für die Elektromobilität basierend auf den oben beschriebenen Zusammensetzungen.

Zur Klarstellung sei angemerkt, dass vom Rahmen der vorliegenden Erfindung alle zu den Komponenten A) bis E) aufgeführten allgemeinen oder in Vorzugsbereichen genannten Definitionen, Mengenangaben und Parameter in beliebigen Kombinationen von den erfindungsgemäßen Verfahren umfasst sind.

## Verwendung

Die Erfindung betrifft auch die Verwendung eines Pigmentsystems auf Basis anorganischer Mischoxide enthaltend Titandioxid, Zinnoxid und Zinkoxid als Laserbeschriftungsadditiv Polyester basierter Hochvoltkomponenten, insbesondere Polyester basierter Hochvoltkomponenten für die Elektromobilität, mittels Laser, vorzugsweise mittels Festkörperlaser mit Nd:$YVO_4$-Kristall bei einer Wellenlänge von 355nm, wobei auf 100 Massenanteile wenigstens eines Polyesters 0,01 bis 5 Massenanteile, besonders bevorzugt 0,01 bis 3 Massenanteile des Pigmentsystems eingesetzt werden mit der Maßgabe eines ΔE <30 zu den L*a*b* Koordinaten einer mit "2" beginnenden Farbnummer der RAL-Farbtabelle. Bevorzugt zu verwendende Pigmentsysteme sind Mischoxide enthaltend Titandioxid, Zinnoxid und Zinkoxid der CAS-Nr. 923954-49-8. Erfindungsgemäß insbesondere bevorzugtes Pigmentsystem sind C.I. Pigment Orange 82 [CAS-Nr. 2170864-77-2] oder C.I.Pigment Yellow 216 [CAS-Nr. 817181-98-9] einzusetzen.

Das erfindungsgemäß zu verwendende Pigmentsystem auf Basis anorganischer Mischoxide aus Titandioxid, Zinnoxid und Zinkoxid kann direkt als Pulver, oder aber in Form einer Paste oder eines Masterbatches, Kompaktes oder Konzentrates eingesetzt bzw. verwendet werden. Der Fachmann versteht unter dem Begriff Masterbatch Kunststoffadditive in Form von Granulaten, hier mit einem Gehalt an Pigmentsystem auf Basis anorganischer Mischoxide aus Titandioxid, Zinnoxid und Zinkoxid, die höher sind als in der Endanwendung. Masterbatche werden dem Polymer bzw. Kunststoff (Rohpolymer) zum Einfärben oder zur Veränderung seiner Eigenschaften beigemischt. Im Gegensatz zu pulverförmigen Zusatzstoffen erhöhen Masterbatche die technische Prozesssicherheit und sind zudem gut zu verarbeiten.

Bevorzugt ist die Verwendung eines Pigmentsystems auf Basis anorganischer Mischoxide enthaltend Titandioxid, Zinnoxid und Zinkoxid als Laserbeschriftungsadditiv Polyester basierter Hochvoltkomponenten, insbesondere Polyester basierter Hochvoltkomponenten für die Elektromobilität, mittels Laser, vorzugsweise mittels Festkörperlaser mit Nd:$YVO_4$-Kristall bei einer Wellenlänge von 355nm, wobei auf

A) 100 Massenanteile wenigstens eines Polyesters, vorzugsweise eines Polycarbonats oder $C_2$-$C_{10}$-Polyalkylenterephthalats, insbesondere Polybutylenterephthalat,

B) 0,01 bis 5 Massenanteile, besonders bevorzugt 0,01 bis 3 Massenanteile des Pigmentsystems eingesetzt werden, mit der Maßgabe eines ΔE <30 zu den L*a*b* Koordinaten einer mit "2" beginnenden Farbnummer der RAL-Farbtabelle. Bevorzugt zu verwendende Pigmentsysteme sind Mischoxide enthaltend Titandioxid, Zinnoxid und Zinkoxid der CAS-Nr. 923954-49-8. Erfindungsgemäß insbesondere bevorzugtes Pigmentsystem sind C.I. Pigment Orange 82 [CAS-Nr. 2170864-77-2] oder C.I.Pigment Yellow 216 [CAS-Nr. 817181-98-9] einzusetzen.

Bevorzugt ist die Verwendung eines Pigmentsystems auf Basis anorganischer Mischoxide enthaltend Titandioxid, Zinnoxid und Zinkoxid als Laserbeschriftungsadditiv Polyester basierter Hochvoltkomponenten, insbesondere Polyester basierter Hochvoltkomponenten für die Elektromobilität, mittels Laser, vorzugsweise mittels Festkörperlaser mit Nd:$YVO_4$-Kristall bei einer Wellenlänge von 355nm, wobei auf

A) auf 100 Massenanteile wenigstens eines Polyesters, vorzugsweise eines Polycarbonats oder $C_2$-$C_{10}$-Polyalkylenterephthalats, insbesondere Polybutylenterephthalat,

B) 0,01 bis 5 Massenanteile des Pigmentsystems, und

C) 1 bis 150 Massenanteile wenigstens eines Füllstoffs oder Verstärkungsstoffs auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, eingesetzt werden,
mit der Maßgabe eines ΔE <30 zu den L*a*b* Koordinaten einer mit "2" beginnenden Farbnummer der RAL-Farbtabelle. Bevorzugt zu verwendende Pigmentsysteme sind Mischoxide enthaltend Titandioxid, Zinnoxid und Zinkoxid der CAS-Nr. 923954-49-8. Erfindungsgemäß insbesondere bevorzugtes Pigmentsystem sind C.I. Pigment Orange 82 [CAS-Nr. 2170864-77-2] oder C.I.Pigment Yellow 216 [CAS-Nr. 817181-98-9] einzusetzen.

Bevorzugt ist die Verwendung eines Pigmentsystems auf Basis anorganischer Mischoxide enthaltend Titandioxid, Zinnoxid und Zinkoxid als Laserbeschriftungsadditiv Polyester basierter Hochvoltkomponenten, insbesondere Polyester basierter Hochvoltkomponenten für die Elektromobilität, mittels Laser, vorzugsweise mittels Festkörperlaser mit Nd:$YVO_4$-Kristall bei einer Wellenlänge von 355nm, wobei auf

A) auf 100 Massenanteile wenigstens eines Polyesters, vorzugsweise eines Polycarbonats oder $C_2$-$C_{10}$-Polyalkylenterephthalats, insbesondere Polybutylenterephthalat,

B) 0,01 bis 5 Massenanteile des Pigmentsystems, und

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, eingesetzt werden,
mit der Maßgabe eines ΔE <30 zu den L*a*b* Koordinaten einer mit "2" beginnenden Farbnummer der RAL-Farbtabelle. Bevorzugt zu verwendende Pigmentsysteme sind Mischoxide enthaltend Titandioxid, Zinnoxid und Zinkoxid der CAS-Nr. 923954-49-8. Erfindungsgemäß insbesondere bevorzugtes Pigmentsystem sind C.I. Pigment Orange 82 [CAS-Nr. 2170864-77-2] oder C.I.Pigment Yellow 216 [CAS-Nr. 817181-98-9] einzusetzen.

Bevorzugt ist die Verwendung eines Pigmentsystems auf Basis anorganischer Mischoxide enthaltend Titandioxid, Zinnoxid und Zinkoxid als Laserbeschriftungsadditiv Polyester basierter Hochvoltkomponenten, insbesondere Polyester basierter Hochvoltkomponenten für die Elektromobilität, mittels Laser, vorzugsweise mittels Festkörperlaser mit Nd:$YVO_4$-Kristall bei einer Wellenlänge von 355nm, wobei auf

A) auf 100 Massenanteile wenigstens eines Polyesters, vorzugsweise vorzugsweise eines Polycarbonats oder $C_2$-$C_{10}$-Polyalkylenterephthalats, insbesondere Polybutylenterephthalat,

B) 0,01 bis 5 Massenanteile wenigstens des Pigmentsystems, und

E') 0,01 bis 2 Massenanteile wenigstens Titandioxid, eingesetzt werden,
mit der Maßgabe eines ΔE <30 zu den L*a*b* Koordinaten einer mit "2" beginnenden Farbnummer der RAL-Farbtabelle. Bevorzugt zu verwendende Pigmentsysteme sind Mischoxide enthaltend Titandioxid, Zinnoxid und Zinkoxid der CAS-Nr. 923954-49-8. Erfindungsgemäß insbesondere bevorzugtes Pigmentsystem sind C.I. Pigment Orange 82 [CAS-Nr. 2170864-77-2] oder C.I.Pigment Yellow 216 [CAS-Nr. 817181-98-9] einzusetzen.

Bevorzugt ist die Verwendung eines Pigmentsystems auf Basis anorganischer Mischoxide enthaltend Titandioxid, Zinnoxid und Zinkoxid als Laserbeschriftungsadditiv Polyester basierter Hochvoltkomponenten, insbesondere Polyester basierter Hochvoltkomponenten für die Elektromobilität, mittels Laser, vorzugsweise mittels Festkörperlaser mit Nd:$YVO_4$-Kristall bei einer Wellenlänge von 355nm, wobei auf

A) auf 100 Massenanteile wenigstens eines Polyesters, vorzugsweise vorzugsweise eines Polycarbonats oder $C_2$-$C_{10}$-Polyalkylenterephthalats, insbesondere Polybutylenterephthalat,

B) 0,01 bis 5 Massenanteile wenigstens des Pigmentsystems, und

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester,
mit der Maßgabe eines ΔE <30 zu den L*a*b* Koordinaten einer mit "2" beginnenden Farbnummer der RAL-Farbtabelle. Bevorzugt zu verwendende Pigmentsysteme sind Mischoxide enthaltend Titandioxid, Zinnoxid und Zinkoxid der CAS-Nr. 923954-49-8. Erfindungsgemäß insbesondere bevorzugtes Pigmentsystem sind C.I. Pigment Orange 82 [CAS-Nr. 2170864-77-2] oder C.I.Pigment Yellow 216 [CAS-Nr. 817181-98-9] einzusetzen.

Bevorzugt ist die Verwendung eines Pigmentsystems auf Basis anorganischer Mischoxide enthaltend Titandioxid, Zinnoxid und Zinkoxid als Laserbeschriftungsadditiv Polyester basierter Hochvoltkomponenten, insbesondere Polyester basierter Hochvoltkomponenten für die Elektromobilität, mittels Laser, vorzugsweise mittels Festkörperlaser mit Nd:$YVO_4$-Kristall bei einer Wellenlänge von 355nm, wobei auf

A) auf 100 Massenanteile wenigstens eines Polyesters, vorzugsweise vorzugsweise eines Polycarbonats oder $C_2$-$C_{10}$-Polyalkylenterephthalats, insbesondere Polybutylenterephthalat,

B) 0,01 bis 5 Massenanteile des Pigmentsystems,

C) 1 bis 150 Massenanteile wenigstens eines Füllstoffstoffs oder Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, eingesetzt werden,
mit der Maßgabe eines ΔE <30 zu den L*a*b* Koordinaten einer mit "2" beginnenden Farbnummer der RAL-Farbtabelle. Bevorzugt zu verwendende Pigmentsysteme sind Mischoxide enthaltend Titandioxid, Zinnoxid und Zinkoxid der CAS-Nr. 923954-49-8. Erfindungsgemäß insbesondere bevorzugtes Pigmentsystem sind C.I. Pigment Orange 82 [CAS-Nr. 2170864-77-2] oder C.I.Pigment Yellow 216 [CAS-Nr. 817181-98-9] einzusetzen.

Bevorzugt ist die Verwendung eines Pigmentsystems auf Basis anorganischer Mischoxide enthaltend Titandioxid, Zinnoxid und Zinkoxid als Laserbeschriftungsadditiv Polyester basierter Hochvoltkomponenten, insbesondere Polyester basierter Hochvoltkomponenten für die Elektromobilität, mittels Laser, vorzugsweise mittels Festkörperlaser mit Nd:$YVO_4$-Kristall bei einer Wellenlänge von 355nm, wobei auf

A) auf 100 Massenanteile wenigstens eines Polyesters, vorzugsweise vorzugsweise eines Polycarbonats oder $C_2$-$C_{10}$-Polyalkylenterephthalats, insbesondere Polybutylenterephthalat,

B) 0,01 bis 5 Massenanteile des Pigmentsystems,

C) 1 bis 150 Massenanteile wenigstens eines Füllstoffstoffs oder Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat,

Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und

E') 0,01 bis 2 Massenanteile wenigstens Titandioxid, eingesetzt werden,
mit der Maßgabe eines ΔE <30 zu den L*a*b* Koordinaten einer mit "2" beginnenden Farbnummer der RAL-Farbtabelle. Bevorzugt zu verwendende Pigmentsysteme sind Mischoxide enthaltend Titandioxid, Zinnoxid und Zinkoxid der CAS-Nr. 923954-49-8. Erfindungsgemäß insbesondere bevorzugtes Pigmentsystem sind C.I. Pigment Orange 82 [CAS-Nr. 2170864-77-2] oder C.I.Pigment Yellow 216 [CAS-Nr. 817181-98-9] einzusetzen.

Bevorzugt ist die Verwendung eines Pigmentsystems auf Basis anorganischer Mischoxide enthaltend Titandioxid, Zinnoxid und Zinkoxid als Laserbeschriftungsadditiv Polyester basierter Hochvoltkomponenten, insbesondere Polyester basierter Hochvoltkomponenten für die Elektromobilität, mittels Laser, vorzugsweise mittels Festkörperlaser mit Nd:$YVO_4$-Kristall bei einer Wellenlänge von 355nm, wobei auf

A) auf 100 Massenanteile wenigstens eines Polyesters, vorzugsweise vorzugsweise eines Polycarbonats oder $C_2$-$C_{10}$-Polyalkylenterephthalats, insbesondere Polybutylenterephthalat,

B) 0,01 bis 5 Massenanteile des Pigmentsystems,

C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester, eingesetzt werden,
mit der Maßgabe eines ΔE <30 zu den L*a*b* Koordinaten einer mit "2" beginnenden Farbnummer der RAL-Farbtabelle. Bevorzugt zu verwendende Pigmentsysteme sind Mischoxide enthaltend Titandioxid, Zinnoxid und Zinkoxid der CAS-Nr. 923954-49-8. Erfindungsgemäß insbesondere bevorzugtes Pigmentsystem sind C.I. Pigment Orange 82 [CAS-Nr. 2170864-77-2] oder C.I.Pigment Yellow 216 [CAS-Nr. 817181-98-9] einzusetzen.

Bevorzugt ist die Verwendung eines Pigmentsystems auf Basis anorganischer Mischoxide enthaltend Titandioxid, Zinnoxid und Zinkoxid als Laserbeschriftungsadditiv Polyester basierter Hochvoltkomponenten, insbesondere Polyester basierter Hochvoltkomponenten für die Elektromobilität, mittels Laser, vorzugsweise mittels Festkörperlaser mit Nd:$YVO_4$-Kristall bei einer Wellenlänge von 355nm, wobei auf

A) auf 100 Massenanteile wenigstens eines vorzugsweise eines Polycarbonats oder $C_2$-$C_{10}$-Polyalkylenterephthalats, insbesondere Polybutylenterephthalat,

B) 0,01 bis 5 Massenanteile des Pigmentsystems,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, eingesetzt werden,
und

E') 0,01 bis 2 Massenanteile wenigstens Titandioxid, eingesetzt werden,
mit der Maßgabe eines ΔE <30 zu den L*a*b* Koordinaten einer mit "2" beginnenden Farbnummer der RAL-Farbtabelle. Bevorzugt zu verwendende Pigmentsysteme sind Mischoxide enthaltend Titandioxid, Zinnoxid und Zinkoxid der CAS-Nr. 923954-49-8. Erfindungsgemäß insbesondere bevorzugtes Pigmentsystem sind C.I. Pigment Orange 82 [CAS-Nr. 2170864-77-2] oder C.I.Pigment Yellow 216 [CAS-Nr. 817181-98-9] einzusetzen.

Bevorzugt ist die Verwendung eines Pigmentsystems auf Basis anorganischer Mischoxide enthaltend Titandioxid, Zinnoxid und Zinkoxid als Laserbeschriftungsadditiv Polyester basierter Hochvoltkomponenten, insbesondere Polyester basierter Hochvoltkomponenten für die Elektromobilität, mittels Laser, vorzugsweise mittels Festkörperlaser mit Nd:$YVO_4$-Kristall bei einer Wellenlänge von 355nm, wobei auf

A) auf 100 Massenanteile wenigstens eines Polyesters, vorzugsweise vorzugsweise eines Polycarbonats oder $C_2$-$C_{10}$-Polyalkylenterephthalats, insbesondere Polybutylenterephthalat,

B) 0,01 bis 5 Massenanteile des Pigmentsystems,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester,
mit der Maßgabe eines $\Delta E < 30$ zu den L*a*b* Koordinaten einer mit "2" beginnenden Farbnummer der RAL-Farbtabelle. Bevorzugt zu verwendende Pigmentsysteme sind Mischoxide enthaltend Titandioxid, Zinnoxid und Zinkoxid der CAS-Nr. 923954-49-8. Erfindungsgemäß insbesondere bevorzugtes Pigmentsystem sind C.I. Pigment Orange 82 [CAS-Nr. 2170864-77-2] oder C.I.Pigment Yellow 216 [CAS-Nr. 817181-98-9] einzusetzen.

Bevorzugt ist die Verwendung eines Pigmentsystems auf Basis anorganischer Mischoxide enthaltend Titandioxid, Zinnoxid und Zinkoxid als Laserbeschriftungsadditiv Polyester basierter Hochvoltkomponenten, insbesondere Polyester basierter Hochvoltkomponenten für die Elektromobilität, mittels Laser, vorzugsweise mittels Festkörperlaser mit Nd:$YVO_4$-Kristall bei einer Wellenlänge von 355nm, wobei auf

A) auf 100 Massenanteile wenigstens eines Polyesters, vorzugsweise vorzugsweise eines Polycarbonats oder $C_2$-$C_{10}$-Polyalkylenterephthalats, insbesondere Polybutylenterephthalat,

B) 0,01 bis 5 Massenanteile des Pigmentsystems,

C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln,

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester, und

E') 0,01 bis 2 Massenanteile wenigstens Titandioxid, eingesetzt werden,
mit der Maßgabe eines $\Delta E < 30$ zu den L*a*b* Koordinaten einer mit "2" beginnenden Farbnummer der RAL-Farbtabelle. Bevorzugt zu verwendende Pigmentsysteme sind Mischoxide enthaltend Titandioxid, Zinnoxid und Zinkoxid der CAS-Nr. 923954-49-8. Erfindungsgemäß insbesondere bevorzugtes Pigmentsystem sind C.I. Pigment Orange 82 [CAS-Nr. 2170864-77-2] oder C.I.Pigment Yellow 216 [CAS-Nr. 817181-98-9] einzusetzen.

Bevorzugt ist die Verwendung eines Pigmentsystems auf Basis anorganischer Mischoxide enthaltend Titandioxid, Zinnoxid und Zinkoxid als Laserbeschriftungsadditiv Polyester basierter Hochvoltkomponenten, insbesondere Polyester basierter Hochvoltkomponenten für die Elektromobilität, mittels Laser, vorzugsweise mittels Festkörperlaser

mit Nd:$YVO_4$-Kristall bei einer Wellenlänge von 355nm, wobei auf

A) auf 100 Massenanteile wenigstens eines Polyesters, vorzugsweise vorzugsweise eines Polycarbonats oder $C_2$-$C_{10}$-Polyalkylenterephthalats, insbesondere Polybutylenterephthalat,

B) 0,01 bis 5 Massenanteile des Pigmentsystems,

C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und

E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester,
mit der Maßgabe eines $\Delta E < 30$ zu den L*a*b* Koordinaten einer mit "2" beginnenden Farbnummer der RAL-Farbtabelle. Bevorzugt zu verwendende Pigmentsysteme sind Mischoxide enthaltend Titandioxid, Zinnoxid und Zinkoxid der CAS-Nr. 923954-49-8. Erfindungsgemäß insbesondere bevorzugtes Pigmentsystem sind C.I. Pigment Orange 82 [CAS-Nr. 2170864-77-2] oder C.I.Pigment Yellow 216 [CAS-Nr. 817181-98-9] einzusetzen.

Bevorzugt ist die Verwendung eines Pigmentsystems auf Basis anorganischer Mischoxide enthaltend Titandioxid, Zinnoxid und Zinkoxid als Laserbeschriftungsadditiv Polyester basierter Hochvoltkomponenten, insbesondere Polyester basierter Hochvoltkomponenten für die Elektromobilität, mittels Laser, vorzugsweise mittels Festkörperlaser mit Nd:$YVO_4$-Kristall bei einer Wellenlänge von 355nm, wobei auf

A) auf 100 Massenanteile wenigstens eines Polyesters, vorzugsweise vorzugsweise eines Polycarbonats oder $C_2$-$C_{10}$-Polyalkylenterephthalats, insbesondere Polybutylenterephthalat,

B) 0,01 bis 5 Massenanteile des Pigmentsystems,

C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,

D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln,

E') 0,01 bis 2 Massenanteile wenigstens Titandioxid, eingesetzt werden,
mit der Maßgabe eines $\Delta E < 30$ zu den L*a*b* Koordinaten einer mit "2" beginnenden Farbnummer der RAL-Farbtabelle. Bevorzugt zu verwendende Pigmentsysteme sind Mischoxide enthaltend Titandioxid, Zinnoxid und Zinkoxid der CAS-Nr. 923954-49-8. Erfindungsgemäß insbesondere bevorzugtes Pigmentsystem sind C.I. Pigment Orange 82 [CAS-Nr. 2170864-77-2] oder C.I.Pigment Yellow 216 [CAS-Nr. 817181-98-9] einzusetzen.

Zur Klarstellung sei angemerkt, dass vom Rahmen der vorliegenden Erfindung alle zu den Komponenten A) bis E) aufgeführten allgemeinen oder in Vorzugsbereichen genannten Definitionen, Mengenangaben und Parameter in beliebigen Kombinationen von den erfindungsgemäßen Verwendungen umfasst sind.

**Beispiele**

Zum Nachweis der erfindungsgemäß beschriebenen Verbesserungen der Eigenschaften wurden zunächst durch Compoundierung entsprechende Polyester basierte Polymerzusammensetzungen angefertigt. Die einzelnen Komponenten wurden hierzu in einem Zweiwellenextruder (ZSK 25 Compounder der Fa. Coperion Werner & Pfleiderer (Stuttgart, Deutschland)) bei Temperaturen zwischen 270 und 300°C gemischt, als Strang ausgetragen, bis zur Granulierbarkeit abgekühlt und granuliert. Nach dem Trocknen (in der Regel zwei Tage bei 80°C im Vakuumtrockenschrank) erfolgte die Verarbeitung des Granulats bei Temperaturen im Bereich von 270 bis 290°C zu Normprüfkörpern für die jeweiligen Prüfungen.

Im Rahmen der vorliegenden Versuche galt als Maß für das **Ausbluten** (Bleeding) die Verfärbung einer Weich-PVC-Folie (W-PVC, FB110 weiß, normal kältefest der Fa. Jedi Kunststofftechnik GmbH, Eitorf, Deutschland) mit den Maßen 30•20•2 $mm^3$, die zwischen 2 Kunststoffplatten mit den Maßen 60•40•2$mm^3$ auf Basis der in Tabelle 2 beschriebenen Polymerzusammensetzungen eingespannt, in einem Heißlufttrockenschrank bei 80°C für 12 Stunden gelagert wurde. Die Bewertung erfolgte danach visuell nach dem Graumaßstab gemäß ISO 105-A02, wobei ‚5' bedeutet, dass die PVC-Folie keine Farbänderung zeigte und '1' bedeutet, dass das PVC-Folie eine starke Farbveränderung zeigte.

Im Rahmen der vorliegenden Erfindung galt als Maß für die **Lichtechtheit** (Lightfastness) die Verfärbung der in Tabelle 2 beschriebenen Formmassen in Form von 60•40•2 $mm^3$-Platten nach UV-Lagerung mit einem UV-Licht (Suntest CPS+, 300-800nm, 45-130 klx, mit Window Glass Filter 250-765 $W/m^2$ der Fa. Atlas Material Testing Technology GmbH, Linsengericht, Deutschland) für 96h. Die Bewertung der Verfärbung erfolgte visuell in Anlehnung an den Blaumaßstab (Blue Wool Scale) gemäß **DIN EN ISO 105-B02,** wobei '8' für eine hervorragende Lichtechtheit (geringe Farbänderung) und '1' für sehr geringe Lichtechtheit (starke Farbänderung) steht.

Als Maß für die Qualität der **Laserbeschriftbarkeit** bei 355nm galt im Rahmen der vorliegenden Erfindung der Kontrast einer mit einem Laserstrahl behandelten Fläche im Vergleich zu einer nicht mit dem Laserstrahl behandelten Fläche. Hierzu wurde das Laserbeschriftungsgerät DPL-Lexis-Marker(2W)-UV355nm der Firma ACI Laser GmbH, Chemnitz, Deutschland verwendet, ausgestattet mit der Beschriftungssoftware MagicMarkV3. Als Laser fungierte ein Nd:$YVO_4$ Laserkristall, der ein Laserlicht der Wellenlänge 355nm lieferte. Zum Vergleich des Kontrastes nach Beschriftung wurde eine Schreibgeschwindigkeit ("Speed") von 2000mm/s, eine Pulsfrequenz ("Frequency") von 60000Hz und ein Zeilenabstand "(Line spacing)" von 60$\mu$m gewählt, wobei die Laserleistung ("Power") am Gerät 90% betrug.

Der Kontrast wurde unter Anwendung der Graumaßstabsskala gemäß **ISO 105-A03** wie folgt klassifiziert:

- Klassifizierung ( - ): Die laserbestrahlte Fläche unterschied sich von der nicht laserbestrahlten Fläche vergleichbar einem Graumaßstab nach ISO 105-A03 der Klasse 3/4, 4, 4/5 oder 5. Die laserbestrahlte Fläche war damit nicht oder fast nicht von der nicht laserbestrahlten Fläche zu unterscheiden.

- Klassifizierung (+ ): Die laserbestrahlte Fläche unterschied sich von der nicht laserbestrahlten Fläche vergleichbar einem Graumaßstab nach **ISO 105-A03** der Klassen 1 bis 3. Die laserbestrahlte Fläche war damit gut von der nicht laserbestrahlten Fläche zu unterscheiden

**Edukte:**

| | |
|---|---|
| Komponente A) | Lineares Polybutylenterephthalat (Pocan® B 1300, Handelsprodukt der Lanxess Deutschland GmbH, Köln, Deutschland) mit einer Intrinsischen Viskosität von 93 $cm^3/g$ (gemessen in Phenol : 1,2-Dichlorbenzol = 1:1 bei 25°C) |
| Komponente B1): | Pigment Orange 82 als Sicopal® Orange K2430 der Firma BASF SE, Ludwigshafen |
| Komponente X/1): | 12H-Phthaloperin-12-on [CAS Nr. 6925-69-5] als Macrolex® Orange 3G von der Firma Lanxess Deutschland GmbH, Köln |

**Tabelle II**

| | | Bsp. 1 | Vgl. 1 |
|---|---|---|---|
| Komponente A) | Gew-teile | 100 | 100 |
| Komponente B1) | Gew-teile | 0,5 | |
| Komponente X/1 | Gew-teile | | 0,5 |
| Bleeding | Graumaßstab | 5 | 4 |

(fortgesetzt)

| | | Bsp. 1 | Vgl. 1 |
|---|---|---|---|
| Lichtechtheit | Blaumaßstab | 8 | 6 |
| Laserkontrast 355nm | Einstufung | + | - |

Die Ergebnisse in **Tab. II** zeigen, dass nur das erfindungsgemäße Bsp. 1 bei gleichzeitig hoher Lichtechtheit und sehr geringer Neigung zum Bleeding auch einen hinreichend guten Kontrast nach Laserbeschriftung bei 355nm zeigte, wohingegen die Farbmittel nach dem Stand der Technik nicht gleichzeitig sowohl einen guten Kontrast als auch eine gute Lichtechtheit und eine geringe Neigung zum Bleeding aufwiesen. Die untersuchte Kunststoffplatte in dem erfinderischen Beispiel 1 weist einen RAL Farbwert von 2003 mit einem ΔE von <20 auf.

## Patentansprüche

1. Polymerzusammensetzungen, **dadurch gekennzeichnet, dass**

   A) auf 100 Massenanteile wenigstens eines Polyesters,
   B) 0,01 bis 5 Massenanteile wenigstens eines Pigmentsystems auf Basis eines anorganischen Mischoxids enthaltend Titandioxid, Zinnoxid und Zinkoxid eingesetzt werden,
   mit der Maßgabe eines ΔE <30 zu den L*a*b* Koordinaten einer mit "2" beginnenden Farbnummer der RAL-Farbtabelle.

2. Polymerzusammensetzungen gemäß Anspruch 1, **dadurch gekennzeichnet, dass** als Polyester $C_2$-$C_{10}$-Polyalkylenterephthalats, insbesondere Polybutylenterephthalat, oder Polycarbonat, eingesetzt wird.

3. Polymerzusammensetzungen gemäß Anspruch 1 oder 2, **dadurch gekennzeichnet, dass** diese ein ΔE von <20, besonders bevorzugt ein ΔE <12 und ganz besonders bevorzugt ein ΔE <5, zu den L*a*b* Koordinaten einer mit "2" beginnenden Farbnummer der RAL-Farbtabelle aufweisen.

4. Polymerzusammensetzungen gemäß einem oder mehreren der Ansprüche 1 bis 3, **dadurch gekennzeichnet, dass** als Komponente B) C.I. Pigment Orange 82 mit CAS-Nr. 2170864-77-2 oder C.I.Pigment Yellow 216 mit CAS-Nr. 817181-98-9 eingesetzt wird.

5. Polymerzusammensetzungen gemäß einem oder mehreren der Ansprüche 1 bis 4, **dadurch gekennzeichnet, dass** zusätzlich zu den Komponenten A) und B) noch C) wenigstens ein Füllstoff oder Verstärkungsstoff zu 1 bis 150 Massenanteilen eingesetzt wird.

6. Polymerzusammensetzungen gemäß Anspruch 4, **dadurch gekennzeichnet, dass** zusätzlich zu den Komponenten A), B) und C) oder anstelle von C) noch D) wenigstens ein Flammschutzmittel zu 3 bis 100 Massenanteilen eingesetzt wird.

7. Polymerzusammensetzungen gemäß Anspruch 5, **dadurch gekennzeichnet, dass** zusätzlich zu den Komponenten A), B), C) und D) oder anstelle von C) und/oder D) noch E) wenigstens ein weiteres von den Komponenten B), C) und D) verschiedenes Additiv zu 0,01 bis 80 Massenanteilen eingesetzt wird.

8. Polymerzusammensetzungen gemäß einem oder mehreren der Ansprüche 5 bis 7, **dadurch gekennzeichnet, dass** der Füllstoff oder Verstärkungsstoff auszuwählen ist aus der Gruppe Glaskugeln oder Voll- oder Hohlglaskugeln, oder Glasfasern, gemahlenes Glas, amorphes Quarzglas, Aluminium-Borsilikatglas mit einem Alkaligehalt 1%, amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AIO(OH), Magnesiumcarbonat und Talkum, insbesondere Glasfasern.

9. Polymerzusammensetzungen gemäß Anspruch 8, **dadurch gekennzeichnet, dass** das Flammschutzmittel auszuwählen ist aus mineralischen Flammschutzmitteln, stickstoffhaltigen Flammschutzmitteln oder phosphorhaltigen Flammschutzmitteln.

**10.** Polymerzusammensetzungen gemäß einem oder mehreren der Ansprüche 7 bis 9, **dadurch gekennzeichnet, dass** als Additiv E) wenigstens ein Thermostabilisator eingesetzt wird, vorzugsweise auszuwählen aus der Gruppe der sterisch gehinderten Phenole, insbesondere solche enthaltend mindestens eine 2,6 Di-tert.-butylphenylgruppe und/oder 2-tert.-Butyl-6-methylphenyl-Gruppe, ferner der Phosphite, der Hypophosphite, insbesondere Natriumhypophosphit $NaH_2PO_2$, der Hydrochinone, der aromatischen sekundären Amine und der 3,3'-Thiodipropionsäureester.

**11.** Polymerzusammensetzungen gemäß einem oder mehreren der Ansprüche 7 bis 9, **dadurch gekennzeichnet, dass** als Additiv E) Titandioxid eingesetzt wird.

**12.** Hochvoltkomponenten, insbesondere Hochvoltkomponenten für die Elektromobilität basierend auf Polymerzusammensetzungen gemäß einem oder mehreren der Ansprüche 1 bis 11.

**13.** Hochvoltkomponenten gemäß Anspruch 12, **dadurch gekennzeichnet, dass** es sich dabei um Abdeckungen für Elektrik oder Elektronik, Steuergeräte, Abdeckungen / Gehäuse für Sicherungen, Relais, Batteriezellenmodule, Sicherungshalter, Sicherungsstecker, Anschlussklemmen, Kabelhalterungen oder Ummantelungen, insbesondere Ummantelungen von Hochvoltstromschienen und Hochvoltstromverteilerschienen, handelt.

**14.** Verwendung eines Pigmentsystems auf Basis anorganischer Mischoxide enthaltend Titandioxid, Zinnoxid und Zinkoxid als Laserbeschriftungsadditiv Polyester basierter Hochvoltkomponenten, insbesondere Polyester basierter Hochvoltkomponenten für die Elektromobilität, mittels Laser, vorzugsweise mittels Festkörperlaser mit Nd:$YVO_4$-Kristall bei einer Wellenlänge von 355nm, **dadurch gekennzeichnet, dass** man auf 100 Massenanteile wenigstens eines Polyesters 0,01 bis 5 Massenanteile des Pigmentsystems einsetzt, mit der Maßgabe eines $\Delta E < 30$ zu den L*a*b* Koordinaten einer mit "2" beginnenden Farbnummer der RAL-Farbtabelle, vorzugsweise ein Pigmentsystem enthaltend Titandioxid, Zinnoxid und Zinkoxid der CAS-Nr. 923954-49-8, besonders bevorzugt C.I. Pigment Orange 82 [CAS-Nr. 2170864-77-2] oder C.I.Pigment Yellow 216 [CAS-Nr. 817181-98-9].

**15.** Verfahren zur Herstellung von Hochvoltkomponenten, insbesondere von Hochvoltkomponenten für die Elektromobilität, **dadurch gekennzeichnet, dass** man

A) auf 100 Massenanteile wenigstens eines Polyesters, vorzugsweise $C_2$-$C_{10}$-Polyalkylenterephthalats, insbesondere Polybutylenterephthalat, oder Polycarbonat, und
B) 0,01 bis 5 Massenanteile wenigstens eines Pigmentsystems auf Basis anorganischer Mischoxide enthaltend Titandioxid, Zinnoxid und Zinkoxid zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet, mit der Maßgabe eines $\Delta E < 30$ zu den L*a*b* Koordinaten einer mit "2" beginnenden Farbnummer der RAL-Farbtabelle.

**16.** Verfahren gemäß Anspruch 15, **dadurch gekennzeichnet, dass** man die Hochvoltkomponenten, insbesondere die Hochvoltkomponenten für die Elektromobilität, abschließend mit einem Laser beschriftet.

## Claims

**1.** Polymer compositions, **characterized in that**

A) per 100 parts by mass of at least one polyester,
B) 0.01 to 5 parts by mass of at least one pigment system based on an inorganic mixed oxide containing titanium dioxide, tin oxide and zinc oxide are used,

with the proviso of a $\Delta E < 30$ with respect to the L*a*b* coordinates of a colour number beginning with "2" in the RAL colour chart.

**2.** Polymer compositions according to Claim 1, **characterized in that** the polyester used is $C_2$-$C_{10}$-polyalkylene terephthalate, especially polybutylene terephthalate, or polycarbonate.

3. Polymer compositions according to Claim 1 or 2, **characterized in that** these have a ΔE of < 20, more preferably a ΔE < 12 and most preferably a ΔE < 5, with respect to the L*a*b* coordinates of a colour number beginning with "2" in the RAL colour chart.

4. Polymer compositions according to one or more of Claims 1 to 3, **characterized in that** component B) used is C.I. Pigment Orange 82 with CAS No. 2170864-77-2 or C.I. Pigment Yellow 216 with CAS No. 817181-98-9.

5. Polymer compositions according to one or more of Claims 1 to 4, **characterized in that** C) at least one filler or reinforcer in an amount of 1 to 150 parts by mass is used in addition to components A) and B).

6. Polymer compositions according to Claim 4, **characterized in that** D) at least one flame retardant in an amount of 3 to 100 parts by mass is used in addition to components A), B) and C) or in place of C).

7. Polymer compositions according to Claim 5, **characterized in that** E) at least one further additive other than components B), C) and D) in an amount of 0.01 to 80 parts by mass is used in addition to components A), B), C) and D) or in place of C) and/or D).

8. Polymer compositions according to one or more of Claims 5 to 7, **characterized in that** the filler or reinforcer is selected from the group of glass beads or solid or hollow glass beads, or glass fibres, ground glass, amorphous quartz glass, aluminium borosilicate glass having an alkali metal content of 1%, amorphous silica, quartz flour, calcium silicate, calcium metasilicate, magnesium carbonate, kaolin, calcined kaolin, chalk, kyanite, powdered or ground quartz, mica, phlogopite, barium sulfate, feldspar, wollastonite, montmorillonite, pseudoboehmite of the formula AlO(OH), magnesium carbonate and talc, especially glass fibres.

9. Polymer compositions according to Claim 8, **characterized in that** the flame retardant is selected from mineral flame retardants, nitrogen-containing flame retardants and phosphorus-containing flame retardants.

10. Polymer compositions according to one or more of Claims 7 to 9, **characterized in that** at least one thermal stabilizer is used as additive E) and is preferably selected from the group of sterically hindered phenols, especially those containing at least one 2,6-di-tert-butylphenyl group and/or 2-tert-butyl-6-methylphenyl group, furthermore phosphites, hypophosphites, especially sodium hypophosphite $NaH_2PO_2$, hydroquinones, aromatic secondary amines and 3,3'-thiodipropionates.

11. Polymer compositions according to one or more of Claims 7 to 9, **characterized in that** the additive E) used is titanium dioxide.

12. High-voltage components, especially high-voltage components for electromobility, based on polymer compositions according to one or more of Claims 1 to 11.

13. High-voltage components according to Claim 12, **characterized in that** said components are covers for electrics or electronics, control devices, covers/housings for fuses, relays, battery cell modules, fuse holders, fuse plugs, terminals, cable holders or sheathings, especially sheathings of high-voltage bus bars and high-voltage distributor bus bars.

14. Use of a pigment system based on inorganic mixed oxides containing titanium dioxide, tin oxide and zinc oxide as laser inscription additive of polyester-based high-voltage components, especially polyester-based high-voltage components for electromobility, by laser, especially solid-state laser with Nd:$YVO_4$ crystal at a wavelength of 355 nm, **characterized in that** 0.01 to 5 parts by mass of the pigment system are used per 100 parts by mass of at least one polyester, with the proviso of a ΔE < 30 with respect to the L*a*b* coordinates of a colour number beginning with "2" in the RAL colour chart, preferably a pigment system containing titanium dioxide, tin oxide and zinc oxide of CAS No. 923954-49-8, more preferably C.I. Pigment Orange 82 [CAS No. 2170864-77-2] or C.I. Pigment Yellow 216 [CAS No. 817181-98-9].

15. Process for producing high-voltage components, especially high-voltage components for electromobility, **characterized in that**

A) per 100 parts by mass of at least one polyester, preferably $C_2$-$C_{10}$-polyalkylene terephthalate, especially polybutylene terephthalate, or polycarbonate, and

B) 0.01 to 5 parts by mass of at least one pigment system based on inorganic mixed oxides containing titanium dioxide, tin oxide and zinc oxide are mixed into polymer compositions, extruded into strands, cooled until pelletizable, dried and pelletized, and the polymer compositions are then processed further by injection moulding, including the special methods of gas injection methodology, water injection methodology and projectile injection methodology, by extrusion methods, including profile extrusion, or by blow moulding, with the proviso of a $\Delta E < 30$ with respect to the L*a*b* coordinates of a colour number beginning with "2" in the RAL colour chart.

**16.** Process according to Claim 15, **characterized in that** the high-voltage components, especially the high-voltage components for electromobility, are subsequently inscribed with a laser.

**Revendications**

**1.** Compositions de polymères, **caractérisées en ce qu'**on utilise

A) pour 100 parties en masse d'au moins un polyester,
B) 0,01 à 5 parties en masse d'au moins un système pigmentaire à base d'un oxyde mixte inorganique contenant du dioxyde de titane, de l'oxyde d'étain et de l'oxyde de zinc,

à la condition d'un $\Delta E < 30$ par rapport aux coordonnées L*a*b* d'un numéro de couleur commençant par « 2 » du tableau des couleurs RAL.

**2.** Compositions de polymères selon la revendication 1, **caractérisées en ce qu'**on utilise comme polyester un poly(téréphtalate d'alkylène en $C_2$-$C_{10}$), en particulier le poly(téréphtalate de butylène) ou un polycarbonate.

**3.** Compositions de polymères selon la revendication 1 ou 2, **caractérisées en ce qu'**elles présentent un $\Delta E < 20$, d'une manière particulièrement préférée un $\Delta E < 12$ et d'une manière tout particulièrement préférée un $\Delta E < 5$ par rapport aux coordonnées L*a*b* d'un numéro de couleur commençant par « 2 » du tableau des couleurs RAL.

**4.** Compositions de polymères selon l'une ou plusieurs des revendications 1 à 3, **caractérisées en ce qu'**on utilise comme composant B) le C.I. Pigment Orange 82, numéro CAS 2170864-77-2 ou le C.I. Pigment Yellow 216, numéro CAS 817181-98-9.

**5.** Compositions de polymères selon l'une ou plusieurs des revendications 1 à 4, **caractérisées en ce qu'**on utilise en plus des composants A) et B) un composant C), au moins une charge ou un renfort, en une quantité de 1 à 150 parties en masse.

**6.** Compositions de polymères selon la revendication 4, **caractérisées en ce qu'**on utilise en plus des composants A), B) et C) ou à la place de C) un composant D), au moins un agent d'ignifugation en une quantité de 3 à 100 parties en masse.

**7.** Compositions de polymères selon la revendication 5, **caractérisées en ce qu'**on utilise en plus des composants A), B), C) et D) ou à la place de C) et/ou de D) un composant E), au moins un autre additif, différent des composants B), C) et D), en une quantité de 0,01 à 80 parties en masse.

**8.** Compositions de polymères selon l'une ou plusieurs des revendications 5 à 7, **caractérisées en ce que** la charge ou le renfort doit être choisi dans le groupe billes de verre ou billes de verre plein ou creux, ou fibres de verre, verre pilé, verre quartzeux amorphe, verre au borosilicate d'aluminium ayant une teneur en alcalis de 1 %, silice amorphe, farine de quartz, silicate de calcium, métasilicate de calcium, carbonate de magnésium, kaolin, kaolin calciné, craie, kyanite, quartz pulvérisé ou broyé, mica, phlogopite, sulfate de baryum, feldspath, wollastonite, montmorillonite, pseudo-böhmite de formule AlO(OH), carbonate de magnésium et talc, en particulier fibres de verre.

**9.** Compositions de polymères selon la revendication 8, **caractérisées en ce que** l'agent d'ignifugation doit être choisi parmi les agents d'ignifugation minéraux, les agents d'ignifugation azotés ou les agents d'ignifugation phosphorés.

**10.** Compositions de polymères selon l'une ou plusieurs des revendications 7 à 9, **caractérisées en ce qu'**on utilise comme additif E) au moins un thermostabilisant, devant être de préférence choisi dans le groupe des phénols à empêchement stérique, en particulier de ceux contenant au moins un groupe 2,6-di-tert.-butylphényle et/ou un

groupe 2-tert.-butyl-6-méthylphényle, en outre des phosphites, des hypophosphites, en particulier de l'hypophosphite de sodium $NaH_2PO_2$, des hydroquinones, des amines secondaires aromatiques et des esters de l'acide 3,3'-thiodipropionique.

**11.** Compositions de polymères selon l'une ou plusieurs des revendications 7 à 9, **caractérisées en ce qu'**on utilise comme additif E) du dioxyde de titane.

**12.** Composants haute tension, en particulier composants haute tension pour l'électromobilité à base de compositions de polymères selon l'une ou plusieurs des revendications 1 à 11.

**13.** Composants haute tension selon la revendication 12, **caractérisés en ce qu'**ils sont des couvercles pour électricité ou électronique, appareils de commande, couvercles/boîtiers pour fusibles, relais, modules d'éléments de batterie, porte-fusibles, coupe-circuits à broches, bornes, attaches de câbles ou gainages, en particulier gainages de barres omnibus haute tension et de barres distributrices de courant haute tension.

**14.** Utilisation d'un système pigmentaire à base d'oxydes mixtes inorganiques contenant du dioxyde de titane, de l'oxyde d'étain et de l'oxyde de zinc en tant qu'additif pour marquage laser, de composants haute tension à base de polyesters, en particulier de composants haute tension à base de polyesters pour l'électromobilité, à l'aide d'un laser, de préférence à l'aide d'un laser solide ayant un cristal $Nd:YVO_4$ pour une longueur d'onde de 355 nm, **caractérisée en ce qu'**on utilise pour 100 parties en masse d'au moins un polyester 0,01 à 5 parties en masse du système pigmentaire, à la condition d'un $\Delta E < 30$ par rapport aux coordonnées L*a*b* d'un numéro de couleur commençant par « 2 » du tableau des couleurs RAL, de préférence un système pigmentaire contenant du dioxyde de titane, de l'oxyde d'étain et de l'oxyde de zinc, numéro CAS 923954-49-8, d'une manière particulièrement préférée le C.I. Pigment Orange 82 [numéro CAS 2170864-77-2] ou le C.I. Pigment Yellow 216 [numéro CAS 817181-98-9].

**15.** Procédé de fabrication de composants haute tension, en particulier de composants haute tension pour l'électromobilité, **caractérisé en ce que**

A) pour 100 parties en masse d'au moins un polyester, de préférence un poly(téréphtalate d'alkylène en $C_2$-$C_{10}$), en particulier le poly(téréphtalate de butylène), ou d'un polycarbonate, et
B) on mélange 0,01 à 5 parties en masse d'au moins un système pigmentaire à base d'oxydes mixtes inorganiques contenant du dioxyde de titane, de l'oxyde d'étain et de l'oxyde de zinc pour obtenir des compositions de polymères, on en obtient des extrudats jusqu'à possibilité de granulation, on les sèche et on les granule, puis on soumet à une post-transformation les compositions de polymères par moulage par injection, notamment les procédés spéciaux injection de gaz, injection d'eau et injection de projectiles, dans le cadre de procédés par extrusion, y compris en extrusion de profilés ou par soufflage, à la condition d'un $\Delta E < 30$ par rapport aux coordonnées L*a*b* d'un numéro de couleur commençant par « 2 » du tableau des couleurs RAL.

**16.** Procédé selon la revendication 15, **caractérisé en ce qu'**on marque finalement avec un laser les composants haute tension, en particulier les composants haute tension pour l'électromobilité.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0041274 B1
- EP 3281974 A1
- EP 0113229 A1
- DE 4401055 A
- US 3028635 A
- US 3062781 A
- US 2999835 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- JP 61062039 A
- JP 61062040 A
- JP 61105550 A
- US 3288864 A
- JP 60035150 A
- US 4334106 A
- DE 1031512 A
- US 3442864 A
- JP 47014742 A
- US 5399659 A
- DE 19539290 A
- EP 0113229 B1
- DE 4236122 A
- WO 2013083247 A1
- DE 2035390 A
- DE 2248242 A
- US 4937285 A
- DE 3704657 A
- DE 3704655 A
- DE 3631540 A
- DE 3631539 A
- WO 2009003976 A1

### In der Beschreibung aufgeführte Nicht-Patentliteratur

- *CHEMICAL ABSTRACTS*, 6925-69-5
- *CHEMICAL ABSTRACTS*, 24968-12-5
- Kunststoff-Handbuch. Karl Hanser Verlag, 1973, vol. VIII, 695-743
- Chemistry and Physics of Polycarbonates. **H. SCHNELL**. Polymer Reviews. Interscience Publishers, 1964, vol. 9, 77-98
- Chemistry and Physics of Polycarbonates. **H. SCHNELL**. Polymer Reviews. Interscience Publishers, 1964, vol. 9, 44-51
- **K. SCHILLING**. Analytische Ultrazentrifugation. Nanolytics GmbH, 1-15
- *CHEMICAL ABSTRACTS*, 923954-49-8
- *CHEMICAL ABSTRACTS*, 2170864-77-2
- *CHEMICAL ABSTRACTS*, 817181-98-9
- *CHEMICAL ABSTRACTS*, 7440-44-0
- *CHEMICAL ABSTRACTS*, 65997-17-3
- *CHEMICAL ABSTRACTS*, 7631-86-9
- *CHEMICAL ABSTRACTS*, 14808-60-7
- *CHEMICAL ABSTRACTS*, 1344-95-2
- *CHEMICAL ABSTRACTS*, 10101-39-0
- *CHEMICAL ABSTRACTS*, 546-93-0
- *CHEMICAL ABSTRACTS*, 1332-58-7
- *CHEMICAL ABSTRACTS*, 92704-41-1
- *CHEMICAL ABSTRACTS*, 1317-65-3
- *CHEMICAL ABSTRACTS*, 1302-76-7
- *CHEMICAL ABSTRACTS*, 1318-94-1
- *CHEMICAL ABSTRACTS*, 12251-00-2
- *CHEMICAL ABSTRACTS*, 7727-43-7
- *CHEMICAL ABSTRACTS*, 68476-25-5
- *CHEMICAL ABSTRACTS*, 13983-17-0
- *CHEMICAL ABSTRACTS*, 67479-91-8
- *CHEMICAL ABSTRACTS*, 12125-28-9
- *CHEMICAL ABSTRACTS*, 14807-96-6
- Chemie Ingenieur Technik. Wiley-VCH Verlags GmbH, 2000, vol. 72, 273-276
- *CHEMICAL ABSTRACTS*, 1309-42-8
- *CHEMICAL ABSTRACTS*, 1078142-02-5
- *CHEMICAL ABSTRACTS*, 225789-38-8
- *CHEMICAL ABSTRACTS*, 71449-76-8
- *CHEMICAL ABSTRACTS*, 156024-71-4

- *CHEMICAL ABSTRACTS*, 7681-65-4
- *CHEMICAL ABSTRACTS*, 47107-74-4
- *CHEMICAL ABSTRACTS*, 7681-11-0
- *CHEMICAL ABSTRACTS*, 14059-33-7
- *CHEMICAL ABSTRACTS*, 1309-37-1
- *CHEMICAL ABSTRACTS*, 13463-67-7
- *CHEMICAL ABSTRACTS*, 1317-70-0
- *CHEMICAL ABSTRACTS*, 1314-98-3
- *CHEMICAL ABSTRACTS*, 12014-93-6
- *CHEMICAL ABSTRACTS*, 12031-49-1
- *CHEMICAL ABSTRACTS*, 42844-93-9
- *CHEMICAL ABSTRACTS*, 72102-84-2
- *CHEMICAL ABSTRACTS*, 56279-27-7
- *CHEMICAL ABSTRACTS*, 13676-91-0
- *CHEMICAL ABSTRACTS*, 98460-24-3
- *CHEMICAL ABSTRACTS*, 8013-07-8
- **ULLMANN**. *Enzyklopädie der Technischen Chemie*, 1980, vol. 19, 277-295
- *CHEMICAL ABSTRACTS*, 115-83-3
- *CHEMICAL ABSTRACTS*, 1592-23-0
- *CHEMICAL ABSTRACTS*, 110-30-5